# EUROPEAN PATENT SPECIFICATION

(11) **EP 4 048 104 B1**
(45) Date of publication and mention of the grant of the patent: **29.11.2023**
(21) Application number: 20793368.0
(22) Date of filing: 21.10.2020
(51) Int. Cl.: A24F 40/51, A24F 40/53, A24F 40/57

(54) **ELECTRONIC CIGARETTE DEVICE WITH HEATER CONTROL**
ELEKTRONISCHE ZIGARETTENVORRICHTUNG MIT HEIZUNGSSTEUERUNG
DISPOSITIF DE CIGARETTE ÉLECTRONIQUE POURVU D'UNE COMMANDE DE CHAUFFAGE

(30) Priority: 25.10.2019 EP 19205390; 25.10.2019 EP 19205393; 25.10.2019 EP 19205394
(43) Date of publication of application: 31.08.2022
(73) Proprietor: JT International SA, 1202 Geneva (CH)
(72) Inventor: ADAIR, Kyle, Lisburn, BT28 2UW (GB)
(74) Representative: Gill Jennings & Every LLP
(86) International application number: PCT/EP2020/079595
(87) International publication number: WO 2021/078785

(56) References cited:
- WO-A1-2019/138043
- WO-A1-2019/200200
- CN-A- 107 412 927
- CN-B- 105 768 229

## Description

### Field of Invention

The present invention relates to electronic cigarettes, and more specifically temperature control systems for electronic cigarettes.

### Background

Vapor generating devices, such as electronic cigarettes, are becoming increasingly popular consumer products.

Heating devices for vaporisation or aerosolisation are known in the art. Such devices typically include a heater arranged to heat a vaporisable product. In operation, the vaporisable product is heated with the heater to vaporise the constituents of the product for the consumer to inhale. In some examples, the product may comprise tobacco in a capsule or may be similar to a traditional cigarette, in other examples the product may be a liquid, or liquid contents in a capsule.

There is a need for more precise vapor temperature control in such devices. An object of the invention is, therefore, to address such a challenge.

WO 2019/138043 A1 describes an aerosol-generating device comprising an air inlet, an air outlet, an air flow passage extending in a first direction between the air inlet and the air outlet, a heating element in the air flow passage for heating an aerosol-forming substrate, a first temperature sensor for measuring a first temperature at a first position along the air flow passage, a second temperature sensor spaced apart in the first direction from the first sensor for measuring a second temperature at a second position along the air flow passage, and a controller configured to control an operating parameter of the device based on the measured first temperature and the measured second temperature.

WO 2019/200200 A1 describes an electronic vaping device with a fire button that when pressed causes a controller to close a switch to energize a heating element. Operation of the switch can be based on feedback corresponding to a temperature of vapor sensed by a temperature sensor.

### Summary

In an aspect there is provided an electronic cigarette device comprising a mouthpiece provided with a mouthpiece opening, a vapor flow channel arranged to guide a generated vapor to the mouthpiece opening, and a sensor arranged in the vapor flow channel at a position physically displaced from an atomizer, the electronic cigarette device further comprising one or more processors configured to: apply a first power to a heater of an atomizer; determine a first temperature measurement in the vapor flow channel using the sensor; determine a first power adjustment for the heater based upon the first temperature measurement; and adjust the first power to a second power based upon the first power adjustment and apply the second power to the heater.

In this way, the temperature of the generated vapor itself can be directly controlled by using the temperature of the vapor in the vapor flow channel to adjust the atomizer temperature setting. This is beneficial compared to measuring and adjusting the heater temperature to control the vapor temperature as the heater temperature does not necessarily directly correlate to the vapor temperature. For a given heater voltage or temperature, the temperature of the generated vapor can be affected by factors such as the distance between the heater and a mouthpiece of the electronic cigarette device, the diameter and material of the mouthpiece, a type of liquid used for the vapor, ambient air temperature, pressure, and airflow rate. Determining the vapor temperature, rather than the heater voltage or temperature, overcomes this problem and provides a more accurate control over the temperature of the generated vapor. This is particularly beneficial in ensuring that the temperature of vapor, when inhaled by a consumer, meets regulatory guidelines. Furthermore, measuring the temperature of the generated vapor allows for a calibration of the vapor temperature accommodating for manufacturing differences between different inhalers and liquid stores (or cartridges).

Preferably the vapor flow channel includes a vapor flow tube. Preferably the atomizer is arranged to generate a vapor from a vaporizable material such as a vaporizable liquid, or a fibrous material such as tobacco.

Preferably the one or more processors are configured to determine the first temperature measurement at a point in time after the electronic cigarette device is triggered to produce a vapor, when the electronic cigarette device is deemed to have reached its optimal operating temperature.

Preferably, the optimal operating temperature is when the heater is at a sufficient temperature and the liquid surrounding the heater is at a specific temperature such that the electronic cigarette device is producing vapor. Preferably, the point in time is between 1.5 and 3.5 seconds, and more preferably between 2 and 3 seconds.

Preferably the one or more processors are further configured to compare the first temperature measurement to a predetermined data set to determine if a liquid store used with the electronic cigarette device contains sufficient liquid.

Preferably, determining if the liquid store contains sufficient liquid occurs before determining the first power adjustment. It has been found that, in addition to its use in controlling heater temperature, the temperature of a generated vapor additionally corresponds to the saturation level at an atomizer. A lower temperature can correspond to the atomizer being under-saturated. Therefore, by first determining if sufficient liquid is available, a situation can be avoided wherein an under-saturated atomizer which provides a low vapor temperature is heated further under the premise of increasing a vapor temperature despite there not being sufficient vapor available to do so. This improves the user experience by not over-heating an under-saturated atomizer.

Preferably when determining the first temperature measurement, the one or more processors are configured to determine a series of temperature measurements for a predetermined time period.

Recording a series of temperature measurements can improve the accuracy in determining the temperature. Preferably the series of temperature measurements are averaged. Preferably the predetermined time period is within the order of seconds, such as 3 seconds.

Preferably when determining the first power adjustment, the one or more processors are configured to: compare the first temperature measurement to a predetermined threshold to determine the second power; wherein the second power is a lower power than the first power when the first temperature measurement is above the predetermined threshold; and wherein the second power is a higher power than the first power when the first temperature measurement is below the predetermined threshold.

In this way, the temperature of the vapor can be adjusted if it is above or below a desired temperature threshold. This improves the user experience. Preferably, the predetermined threshold is stored in storage accessible by the one or more processors of the electronic cigarette device.

Preferably the predetermined threshold is a predetermined temperature range, and when determining the first power adjustment the one or more processors are configured to: compare the first temperature measurement to the predetermined temperature range to determine the second power; wherein the second power is a lower power than the first power when the first temperature measurement is above the predetermined temperature range; wherein the second power is a higher power than the first power when the first temperature measurement is below the predetermined temperature range; and wherein the second power is equal to the first power when the first temperature measurement is within the predetermined temperature range.

In this way, the temperature of the vapor can be adjusted if it is above or below a desired temperature range. This improves the user experience. Preferably, the predetermined temperature range is stored in storage accessible by the one or more processors of the electronic cigarette device.

Preferably the predetermined threshold is determined based on a type of consumable used with the electronic cigarette device.

Different consumables have different optimal vapor temperatures. In this way, the vapor temperature can be set to an optimal temperature for the type of consumable being used.

Preferably, the consumable is a cartridge containing a vaporisable liquid or a fibrous granular substance (such as tobacco) insertable or connectable to the electronic cigarette device, or a vaporisable liquid in a liquid store of the electronic cigarette device.

Preferably the predetermined threshold is input by a user of the electronic cigarette device.

In this way, the user of the electronic cigarette device can select a preferred temperature, or temperature range, for the vapor.

Preferably the first temperature is measured when the electronic cigarette device is inhaled upon.

In this way, the determined temperature corresponds to the temperature of the vapor generated when the electronic cigarette device is inhaled upon. This prevents the vapor temperature measurements being conflated with ambient temperature measurements in the vapor flow channel when the electronic cigarette device is not being inhaled upon.

Preferably the one or more processors determining the first temperature measurement is triggered by the one or more processors detecting at least one of: a flow rate in the vapor flow tube indicative of inhalation upon the electronic cigarette device; or a vaporisation trigger button, arranged to trigger an atomizer to vaporise a vaporisable material, has been pressed.

Preferably the flow rate in the vapor flow tube is detected by an airflow sensor.

Preferably the first power is a pulse width modulated power output with a first duty cycle and wherein when adjusting the first power to the second power the one or more processors are configured to adjust the first duty cycle to a second duty cycle.

In this way, the power applied to the heater can be adapted to accurately control the temperature.

Preferably the one or more processors are further configured to: apply the second power to a heater of an atomizer; determine a second temperature measurement in the vapor flow channel using the sensor; determine a second power adjustment for the heater based upon the second temperature measurement; and adjust the second power to a third power based upon the second power adjustment and apply the third power to the heater.

In this way, the power can be further controlled based upon a subsequent temperature measurement. Preferably the second temperature measurement is measured during a subsequent inhalation upon the electronic cigarette device.

Preferably when determining the second power adjustment the one or more processors are configured to: compare the second temperature measurement to the predetermined threshold to determine the third power; wherein the third power is a lower power than the second power when the second temperature measurement is above the predetermined threshold; and wherein the third power is a higher power than the second power when the second temperature measurement is below the predetermined threshold.

Preferably the predetermined threshold is a predetermined temperature range, and when determining the second power adjustment the one or more processors are configured to: compare the second temperature measurement to the predetermined temperature range to determine the third power; wherein the third power is a lower power than the second power when the second temperature measurement is above the predetermined temperature range; wherein the third power is a higher power than the second power when the second temperature measurement is below the predetermined temperature range; and wherein the third power is equal to the second power when the second temperature measurement is within the predetermined temperature range.

In this way, the power can be further adjusted so as to refine temperature of the generated vapor such that the vapor is within the desired temperature range.

Preferably the one or more processors are further configured to iteratively determine further temperature measurements in the vapor flow channel, determine further power adjustments for a heater based upon the further temperature measurements, and adjust a power to be applied to the heater to further powers based upon the further power adjustments and apply the further powers to the heater.

In this way, the power can be iteratively adjusted so as to iteratively maintain a desired temperature range for the generated vapor.

In another aspect there is provided a method of operating an electronic cigarette, the electronic cigarette comprising a vapor flow channel arranged to guide a generated vapor to a mouthpiece opening, and a sensor arranged in the vapor flow channel to determine a temperature in the vapor flow channel at a position physically displaced from an atomizer, the method comprising: applying a first power to a heater of an atomizer; determining a first temperature measurement in the vapor flow channel using the sensor; determining a first power adjustment for the heater based upon the first temperature measurement; and adjusting the first power to a second power based upon the first power adjustment and applying the second power to the heater.

In another aspect there is provided a non-transitory computer-readable medium with instructions stored thereon that when executed by one or more processors cause the one or more processors to: apply a first power to a heater of an atomizer; determine a first temperature measurement in a vapor flow channel using a sensor, the sensor arranged in the vapor flow channel of an electronic cigarette device; determine a first power adjustment for the heater based upon the first temperature measurement; and adjust the first power to a second power based upon the first power adjustment and apply the second power to the heater.

In another aspect there is provided an electronic cigarette device comprising a vapor flow channel arranged to guide a generated vapor to a mouthpiece opening, and a sensor arranged in the vapor flow channel to determine a temperature in the vapor flow channel at a position physically displaced from an atomizer, and wherein the electronic cigarette device further comprises one or more processors configured to: retrieve data from the sensor, the data comprising a measured temperature data set, wherein the measured temperature data set comprises one or more temperature measurements as a function of time; compare the measured temperature data set with predetermined temperature data, wherein the predetermined temperature data is indicative of the temperature of the vapor in the vapor flow channel of the electronic cigarette device at different fluid transfer element saturation levels; and determine and perform a further action based upon the comparison.

In this way, the saturation level of the fluid transfer element can be determined from the temperature of a vapor or air in the vapor flow channel, and an appropriate action can be taken if the fluid transfer element is under-saturated, over-saturated or sufficiently saturated.

Preferably the vapor flow channel is arranged to guide the generated vapor to a mouthpiece opening from an atomizer. Preferably the vapor flow channel includes a vapor flow tube. Preferably the sensor measures the temperature in the vapor flow channel; that is the measured temperature data set comprises to temperature(s) measured in the vapor flow channel. Preferably, the fluid transfer element is part of an atomizer, and extends into a liquid store to wick vaporizable liquid from the liquid store to a heater of the atomizer. Preferably, the fluid transfer element is a wick. Preferably an atomizer is arranged to generate a vapor from the vaporizable liquid.

In an example, the measured temperature data set comprises one or more temperature measurements as a function of time for a predetermined time period, wherein the predetermined time period corresponds to the length of time of a single inhalation on the electronic cigarette device. In an example, the predetermined temperature data is indicative of the temperature of the vapor in the vapor flow channel of the electronic cigarette device at different fluid saturation levels for the predetermined time period.

Preferably, the one or more processors are configured to retrieve the measured temperature data set at a point in time after the electronic cigarette device is triggered to produce a vapor, when the electronic cigarette device is deemed to have reached its optimal operating temperature (that is, when the heater is at a sufficient temperature and the liquid surrounding the heater is at a specific temperature such that the electronic cigarette device is producing vapor).

Preferably, the point in time is between 1.5 and 3.5 seconds, and more preferably between 2 and 3 seconds after the electronic cigarette device is triggered to produce a vapor.

It has been found that temperature data sets of temperature against time of the generated vapor or air in the vapor flow channel during inhalation on the electronic cigarette device have a characteristic plot shape in that the shape of the plot of temperature against time varies depending on the saturation level of the fluid transfer element. In this way, a best-fitting predetermined temperature set, corresponding to the saturation level of the fluid transfer element, can be identified for the measured temperature data set thereby providing for a determination of the saturation level of the fluid transfer element.

Preferably, the best fitting predetermined temperature data set is a predetermined temperature data set that is the closest matching to the measured temperature data set. In an example, this can be determined with a least squares analysis.

Preferably when comparing the measured temperature data set with the predetermined temperature data the one or more processors are configured to: compare the measured temperature data set with two or more predetermined temperature data sets; and determine a predetermined temperature data set of the two or more predetermined temperature data sets that is a closest corresponding predetermined temperature data set to the measured temperature data set; wherein a first predetermined temperature data set of the two or more predetermined temperature data sets corresponds to an under-saturated fluid transfer element, and a second predetermined temperature data set of the two or more predetermined temperature data sets corresponds to a sufficiently saturated fluid transfer element.

It has been found that the saturation level of a fluid transfer element corresponds to the temperature of the generated vapor or air in the vapor flow channel. As such, the saturation level of the fluid transfer element is determinable from the temperature of the generated vapor. In this way, if the fluid transfer element is determined to be under-saturated further action can be taken. Preferably, the closest corresponding predetermined data set is a closest matching predetermined data set to the measured temperature data set.

Preferably each of the two or more predetermined temperature data sets comprise a predetermined temperature data point for a first time point; and wherein the one or more processors are configured to determine the closest matching predetermined temperature data set by setting a threshold temperature between the predetermined temperature data points and determining that a measured temperature data point of the measured temperature data set at the first time point is below or not below the threshold temperature.

It has been found that temperature data, as a function of time, of the generated vapor or air in the vapor flow channel during inhalation on the electronic cigarette device has at a characteristic point in which the temperature varies depending on the saturation level of the fluid transfer element. If the measured temperature at the characteristic point is below a threshold it can be determined that the fluid transfer element is under-saturated. In this way, the temperature can be measured and the temperature at the characteristic point can be compared with predetermined temperature data to determine the saturation level of the fluid transfer element.

Preferably when determining the further action the one or more processors are configured to: determine a fluid transfer element is under-saturated when the measured temperature data point is below the threshold temperature, and regulate a heater of an atomizer when the saturation level is determined as under-saturated; and determine a fluid transfer element is sufficiently saturated when the measured temperature data point is not below the threshold temperature, and make no adjustment to a heater when the saturation level is determined as sufficiently saturated.

It has been found that an under-saturated fluid transfer element produces a vapor with a lower temperature at a specific time point than a sufficiently saturated fluid transfer element. In this way, if the fluid transfer element is determined to be under-saturated the heater can be regulated to inhibit the fluid transfer element drying out or a consumer inhaling hot air from a dry fluid transfer element. This improves the user experience.

Preferably each of the two or more predetermined temperature data sets comprise a plurality of predetermined temperature data points as a function of time; and wherein the one or more processors are configured to determine the closest corresponding predetermined temperature data set by identifying which of the two or more predetermined temperature data sets best fits the measured temperature data set.

Preferably when determining the further action the one or more processors are configured to: determine a fluid transfer element is under-saturated when the closest corresponding predetermined temperature data set is the first predetermined temperature data set, and regulate a heater of the electronic cigarette device when the saturation level is determined as under-saturated; and determine a fluid transfer element is sufficiently saturated when the closest corresponding predetermined temperature data set is the second predetermined temperature data set, and make no adjustment to a heater when the saturation level is determined as sufficiently saturated.

In this way, if the fluid transfer element is under-saturated the heater can be regulated to inhibit the fluid transfer element drying out or a consumer inhaling hot air from a dry fluid transfer element. This improves the user experience.

Preferably when regulating a heater the one or more processors are configured to disable the heater or decrease the power output of the heater.

In this way, the heater can be disabled or the power output can be decreased if the liquid store is empty or if the heater is vaporising liquid in the fluid transfer element faster than the fluid transfer element can draw liquid from the liquid store.

Preferably when decreasing the power output of the heater the one or more processors are configured to adjust a duty cycle of the heater.

In this way the heater power output can be accurately controlled.

Preferably the one or more processors are further configured to determine a number of temperature spikes in the measured temperature data set as a function of time, the temperature spikes corresponding to liquid interacting with the sensor.

An over-saturated fluid transfer element leads to projections of hot liquid from the fluid transfer element. It has been found that these can be identified as heat spikes, or anomalies, in the measured temperature data set when a liquid projection interacts with the sensor. In this way, if the fluid transfer element is determined to be over-saturated by detecting such spikes, further action can be taken.

Preferably when comparing the measured temperature data set with the predetermined temperature data the one or more processors are configured to compare the determined number of temperature spikes with a threshold number of temperature spikes.

In this way, over-saturation in the fluid transfer element can be identified.

In an example, the threshold number of temperature spikes can be predetermined from a temperature data set that corresponds to an over-saturated fluid transfer element. A temperature spike can be an increase in temperature or a decrease in temperature, i.e. a positive spike or a negative spike, due to a hot or cold liquid projection respectively.

Preferably when determining a further action the one or more processors are configured to: determine a fluid transfer element is over-saturated when the determined number of temperature spikes is above the threshold number of temperature spikes, and execute a correction program when the saturation level is determined to be over-saturated.

In this way, if over-saturation of the fluid transfer element is identified, it can be corrected for.

Preferably, if the number of temperature spikes is not above the threshold number, no further action is taken and the electronic cigarette device continues to operate as normal.

Preferably when executing the correction program, the one or more processors are configured to increase a power output of a heater.

In this way, the saturation level of the fluid transfer element can be reduced so that the fluid transfer element is no longer over-saturated.

Preferably the temperature measurements are recorded at discrete intervals or wherein the temperature measurements are continuously recorded.

Recording the temperature measurements at discrete intervals minimises a processing burden on one or more processors of the electronic cigarette device.

Recording the temperature measurements continuously provides a more accurate temperature data set.

In another aspect there is provided a method of controlling an electronic cigarette device, the method comprising: retrieving data from a sensor arranged in a vapor flow channel to determine a temperature in the vapor flow channel at a position physically displaced from an atomizer, the data comprising a measured temperature data set, wherein the measured temperature data set comprises one or more temperature measurements as a function of time; comparing the measured temperature data set with predetermined temperature data, wherein the predetermined temperature data is indicative of the temperature of the vapor in the vapor flow channel of the electronic cigarette device at different fluid transfer element saturation levels; and determining and performing a further action based upon the comparison.

In another aspect there is provided a non-transitory computer-readable medium with instructions stored thereon that when executed by one or more processors cause the one or more processors to: retrieve data from a sensor arranged in a vapor flow channel of an electronic cigarette device to determine a temperature in the vapor flow channel at a position physically displaced from an atomizer, the data comprising a measured temperature data set, wherein the measured temperature data set comprises one or more temperature measurements as a function of time; compare the measured temperature data set with predetermined temperature data, wherein the predetermined temperature data is indicative of the temperature of the vapor in the vapor flow channel of the electronic cigarette device at different fluid transfer element saturation levels; and determine and perform a further action based upon the comparison.

In another aspect there is provided an electronic cigarette device comprising: a mouthpiece provided with a mouthpiece opening, a vapor flow channel arranged to guide a generated vapor to the mouthpiece opening; and a sensor arranged in the vapor flow channel to determine a temperature in the vapor flow channel at a position physically displaced from an atomizer.

In this way, the temperature of the generated vapor itself can be directly controlled by using the temperature of the vapor in the vapor flow channel to adjust a temperature setting of a heater of an atomizer. This is beneficial compared to measuring and adjusting the heater temperature to control the vapor temperature as the heater temperature does not necessarily directly correlate to the vapor temperature. For a given heater voltage or temperature, the temperature of the generated vapor can be affected by factors such as the distance between the heater and a mouthpiece of the electronic cigarette, the diameter and material of the mouthpiece, a type of liquid used for the vapor, ambient air temperature, pressure, and airflow rate. Determining the vapor temperature, rather than the heater voltage or temperature, overcomes this problem and provides a more accurate control over the temperature of the generated vapor. This is particularly beneficial in ensuring that the temperature of vapor, when inhaled by a consumer, meets regulatory guidelines. Furthermore, measuring the temperature of the generated vapor allows for a calibration of the vapor temperature accommodating for manufacturing differences between different inhalers and liquid stores (or cartridges).

Preferably, the vapor flow channel includes a vapor flow tube. Preferably, the atomizer is arranged to generate a vapor from a vaporisable material such as a vaporisable liquid, or a fibrous material such as tobacco. Preferably the sensor is arranged at a position physically displaced from an atomizer such that there would be no contact between the sensor and an atomizer.

Preferably the sensor is arranged in the vapor flow channel such that, in operation, the sensor is closer to an end of the vapor flow channel proximal to a mouthpiece than to an end of the vapor flow channel proximal to the atomizer.

In this way, the temperature of the vapor when inhaled by a consumer is accurately controlled by determining the temperature immediately before inhalation. Heat can be transferred from the heater of an atomizer by convection of a generated vapor (or convection of heated air), conduction (by physical contact between the heater and another component) and radiation from the heater. Preferably the sensor is arranged so as to determine convection-based heat transfer. In this way, the conflation of heat transfer by conduction and radiation in temperature measurements is inhibited.

Preferably the sensor is mounted on a support bracket.

Preferably the support bracket is configured to enable a portion of the sensor to at least partially extend into the vapor flow channel.

In this way, a more accurate reading of the vapor temperature can be achieved. In particular, accuracy of the reading of the vapor temperature is improved because the generated vapor has not yet been diluted by air at a mouthpiece of a mouthpiece portion of the electronic cigarette. Preferably, the portion of the sensor at least partially extending into the vapor flow channel is an end portion of the sensor.

Preferably the support bracket is arranged across the vapor flow channel.

In this way, the sensor can be supported in the path of the vapor flow in the vapor flow channel whilst readily allowing the generated vapor to pass through. Preferably, the support bracket may comprise a grid or mesh arranged across the vapor flow channel.

Preferably the electronic cigarette device further comprises: a main body comprising a main control unit; and a mouthpiece portion comprising the sensor; wherein the mouthpiece portion is connected to the main body by a hinge and the sensor is connected to the main control unit by a wired connection routed through the hinge.

In this way, the main control unit may use the detected temperature to adjust the atomizer power accordingly so that the vapor temperature can be accurately controlled in a two-part device in which the mouthpiece is connected by a hinge to the main body of the electronic cigarette. Preferably the main body further comprises a battery and control electronics for the electronic cigarette device.

Preferably the wired connection is a continuous wire.

In this way, the detected vapor temperature can be fed to the main control unit by a robust connection.

Preferably the electronic cigarette device further comprises: a main body comprising a main control unit; and a mouthpiece portion comprising the sensor, the mouthpiece portion connectable and separable from the main body; wherein the sensor is connected to the main control unit by a wired connection, and wherein the wired connection comprises a first portion and a second portion, wherein said portions are connected between the main body and the mouthpiece portion in a releasable connection.

In this way, the sensor arrangement can be implemented in a two-part electronic cigarette, having the sensor in one portion (i.e. the mouthpiece portion) and the main control unit in another portion (i.e. the main body), wherein the portions are fully separable from one another. Preferably the main body further comprises a battery and control electronics for the electronic cigarette device.

Preferably the releasable connection comprises a first contact portion arranged in the mouthpiece portion and a second contact portion located in the main body of the electronic cigarette device, wherein the first contact portion and the second contact portion electrically connect the main body and the mouthpiece portion.

In this way, a connectable and disconnectable electrical connection can be achieved between the sensor and the main control unit. Preferably, the first and second contact portions are circular connectors, arranged to form a connection independent of the angular position between the mouthpiece portion and the main body.

Preferably the first contact portion comprises at least one first protrusion and the second contact portion comprises at least one second protrusion, and wherein the at least one first protrusion and the at least one second protrusion are arranged to be in alignment when the mouthpiece portion and the main body of the electronic cigarette device are in connection.

In this way, communication between the sensor and the main control unit can be easily achieved when bringing the main body and mouthpiece portion into connection with one another. Preferably the protrusions are pogo pins.

Preferably the sensor is physically connected to a second control unit which is separate from and wirelessly connected to a main control unit.

In this way, the main control unit can process the vapor temperature without requiring a physical connection to the sensor. This reduces design constrains for the electronic cigarette. Preferably the wireless connection is a Bluetooth connection.

Preferably the main control unit is arranged in a main body of the electronic cigarette device and the sensor and second control unit are arranged in a mouthpiece portion of the electronic cigarette device, and wherein the mouthpiece portion is separable from the main body.

In this way, a liquid store or cartridge arranged in the mouthpiece portion, for example, can be separated from the main body and refilled or replaced without needing to physically reconnect the sensor to the main circuit unit. This improves the ease of use. Preferably, the mouthpiece portion is fully separable from the main body.

Preferably the sensor is arranged to be located between a first cartridge and a second cartridge in the electronic cigarette device, and wherein the first cartridge comprises liquid and an atomizer and the second cartridge comprises a granulate of fibrous material.

In this way, the vapor temperature can be measured before passing through the granulate of fibrous material. Preferably the measured vapor temperature is adjusted at a controller to account for a change in vapor temperature (i.e. a decrease in vapor temperature) due to the vapor passing through the granulate of fibrous material before being inhaled by the consumer. Preferably the controller stores a predetermined relationship between measured vapor temperature before passing through the granulate of fibrous material, and an expected vapor temperature after passing through the granulate. Preferably the fibrous material comprises tobacco. In this way, an electronic cigarette with a disposable mouthpiece comprised as part of the second cartridge can benefit from the aforementioned advantages of determining the vapor temperature rather than the temperature or voltage of the heater in the atomizer.

Preferably the sensor is one of a thermocouple, a hot wire sensor or a thermistor.

Preferably the thermocouple is a Type K thermocouple.

In another aspect there is provided a method of operating the electronic cigarette device of the preceding aspect, the method comprising: vaporizing a vaporizable material at an atomizer to generate the vapor flow; determining a temperature using the sensor; determining a power adjustment for the atomizer based upon the determined temperature; and adjusting a power of the atomizer in response to the determined temperature.

For the purposes of the present disclosure, it will be understood that the terms vapour and aerosol are interchangeable.

### Brief Description of the Drawings

Embodiments of the invention are now described, by way of example, with reference to the drawings, in which:
Figure 1a is an exploded diagram of an electronic cigarette according to a first embodiment;
Figure 1b is a diagram of an electronic cigarette according to the first embodiment;
Figure 1c is a cutaway diagram of an electronic cigarette according to the first embodiment;
Figure 1d is a cutaway diagram of an alternate electronic cigarette according to the first embodiment;
Figure 2a is a diagram of an electronic cigarette according to a second embodiment;
Figure 2b is a cutaway diagram of a liquid store region of the electronic cigarette according to the second embodiment;
Figure 3a is an exploded diagram of an electronic cigarette according to a third embodiment;
Figure 3b is a diagram of an electronic cigarette according to the third embodiment;
Figure 4a is a cutaway diagram of an electronic cigarette, according to a fourth embodiment, in a closed arrangement;
Figure 4b is a cutaway diagram of an electronic cigarette, according to the fourth embodiment, in an open arrangement;
Figure 5 is a diagram of a temperature sensor and support bracket;
Figure 6 is flow diagram of an electronic cigarette temperature control method;
Figure 7 is a flow diagram of a method of operation of an electronic cigarette;
Figure 8 shows temperature data sets;
Figure 9 shows temperature data profiles; and
Figure 10 shows temperature data profiles.

### Detailed Description

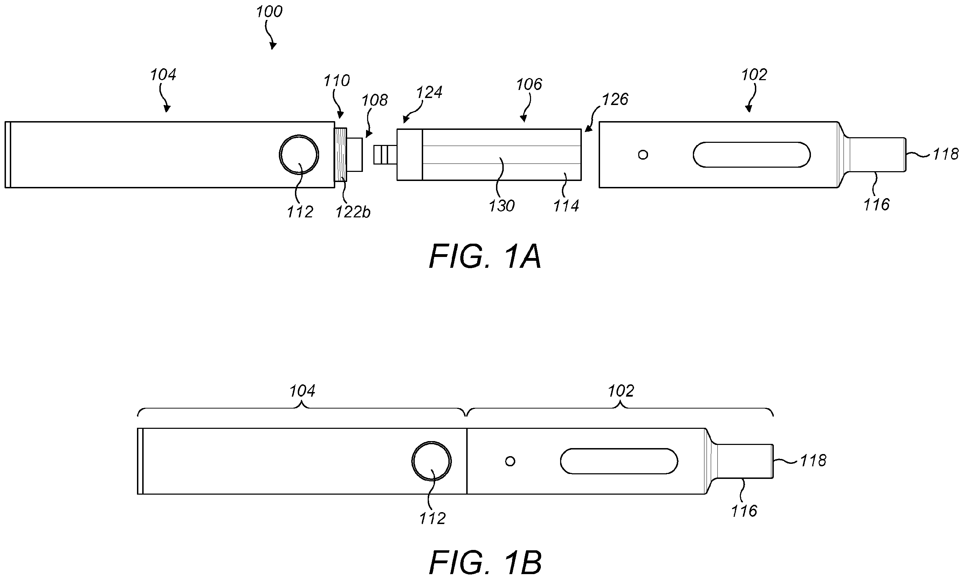

Figures 1a to 1d show embodiments of an electronic cigarette 100. In such embodiments the electronic cigarette 100 has a main body 104 and a mouthpiece portion 102. The mouthpiece portion 102 is arranged to receive a liquid containing cartridge 106, the cartridge 106 being engageable and disengageable to the main body 104, and the mouthpiece portion 102 be connectable to the main body 104. That is, the cartridge 106 can be received within the mouthpiece portion 102, and the cartridge 106 and mouthpiece portion 102 can then be attached to the main body 104. Figure 1a shows the mouthpiece portion 102, main body 104 and cartridge 106 separately; Figure 1b shows the mouthpiece portion 102, main body 104 and cartridge 106 engaged and connected to one another.

The main body 104 comprises a battery for providing power to the electronic cigarette 100, and control electronics for controlling the operation of the electronic cigarette 100. In particular, an atomizer 194 in the cartridge 106 is powered and controlled by the battery and control electronics in the main body 104 when the cartridge 106 is connected to a port 108 at a distal end 110 of the main body 104 to which both the cartridge 106 and mouthpiece portion 102 can be attached. The main body 104 can further include a user operable button 112 for functions such as switching the electronic cigarette 100 on and off, and engaging a heater of the atomizer 194 to vaporise a vaporisable liquid from a liquid store 114 in the cartridge. The control electronics, or main control unit or controller, comprise one or more processors and memory storing operating instructions for the electronic cigarette 100. In an example, the control electronics comprise a printed circuit board.

The mouthpiece portion 102 comprises a mouthpiece 116 with an opening or orifice 118 upon which a consumer inhales; a vapor flow tube 120 is connected to the opening 118 and housed within the mouthpiece portion 102. The mouthpiece portion 102 is connectable and disconnectable from the main body 104; this can be achieved by a e.g. threaded-type connection 122a 122b, or a bayonet-type connection, amongst others.

The cartridge 106 comprises a liquid store 114 arranged to contain a vaporisable liquid. The cartridge 106 further comprises an atomizer 194; the atomizer 194 has a heater and a fluid transfer element, such as a wick or any other suitable means to transport liquid to the heater, arranged to wick liquid from the liquid store 114 to the heater. A first end 124 of the cartridge 106, at which the atomizer 194 is positioned, is arranged to be received in the aforementioned port 108 in the main body 104 such that an electrical connection is achieved between the atomizer 194 and the control electronics and battery in the main body 104 through such an interface. The cartridge containing the atomizer can be considered a cartomizer. In an alternative, the atomizer 194 can be a component of the main body 104 engageable into the liquid store 114 in the cartridge 106.

A vapor flow tube 130 runs axially through the cartridge 106, connecting the atomizer 194 at the first end 124 of the cartridge 106, through the liquid store 114, to a second end 126 of the cartridge 106 (the second end 126 opposite the first end 124). The vapor flow tube 130 in cartridge 106 aligns with the vapor flow tube 120 in the mouthpiece 116 when the cartridge 106 is received in the mouthpiece portion 102, thereby forming an overall vapor flow tube from the atomizer 194 to the mouthpiece 116. In this way, liquid can be wicked from the liquid store 114 to the heater where it is vaporised. When a consumer inhales on the mouthpiece opening 118, the generated vapor is drawn along a vapor flow path or channel 105 from the atomizer 194, through the portion of the vapor flow tube 130 in the cartridge 106, into the portion of the vapor flow tube 120 in the mouthpiece 116, through the portion of the vapor flow tube 120 in the mouthpiece 116, and to the mouthpiece opening 118 for inhalation by the consumer.

In an example, when the liquid in the cartridge 106 has run out, the cartridge 106 can be removed from the mouthpiece portion 102 and replaced with a fresh cartridge 106. In another example, the cartridge 106 can be refilled with fresh liquid.

A temperature sensor 150 is arranged in the vapor flow path 105. The temperature sensor 150 is arranged to measure the temperature of the generated vapor. The temperature sensor 150 can be positioned on a support bracket 152 at a position away, or physically displaced, from the atomizer 194 and toward the mouthpiece 116. Alternatively, the sensor can comprise an extending part that is self-supportive and extending into the vapor flow path. The sensor can also be on the inner surface in the vapor flow tube.

In a first example, the temperature sensor 150 is a component of the mouthpiece portion 102. The temperature sensor 150 can be arranged in the portion of the vapor flow tube 120 in the mouthpiece 116, or in a region of the mouthpiece portion 102 between the portion of the vapor flow tube 120 in the mouthpiece 116 and the portion of the vapor flow tube 130 in the cartridge 106.

In such examples, the temperature sensor 150 can be connected to the controller in the main body 104 by way of a wired connection 154. As previously described, the mouthpiece portion 102 and the main body 104 may be connectable and disconnectable from one another. As such, a connectable and disconnectable electrical connection between the temperature sensor 150 and the controller can be utilised.

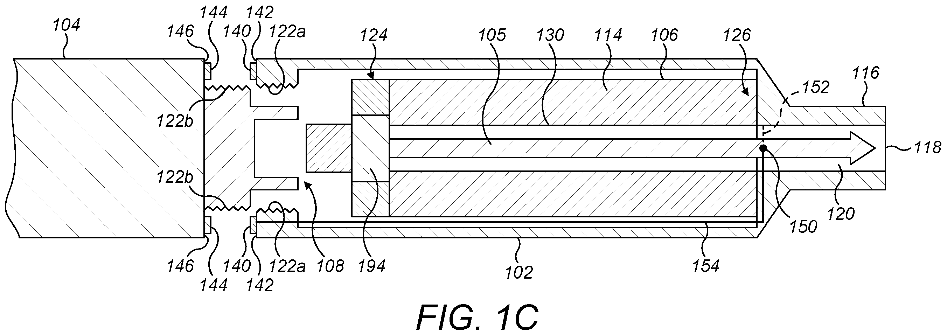

One or more terminals 140, connected to the temperature sensor 150 by a wired connection(s) 154, are arranged on a surface 142 of the mouthpiece portion 102 at an end distal from the mouthpiece 116 that abuts a cooperating surface 146 of the main body 104 at the end of the main body 104 arranged to engage the cartridge 106 and mouthpiece portion 102 when the mouthpiece portion 102 and the main body 104 are brought into connection with one another; a corresponding terminal(s) 144, connected to the controller by a wired connection(s), is arranged on the cooperating surface 146 of the main body 104. This is best shown in Figure 1c, which presents a cutaway diagram of the mouthpiece portion 102, containing the cartridge 106, and proximal to the main body 104 for connection. The terminals 140 144 on the mouthpiece portion 102 and the main body 104 are arranged such that when the mouthpiece portion 102 is fully connected to the main body 104, the terminal(s) 140 of the mouthpiece portion 102 is aligned with the corresponding terminal(s) 144 of the main body 104.

In this way, when the main body 104 and the mouthpiece portion 102 are connected to one another, the terminals 140 144 are aligned forming a connection between the sensor 150 and the controller. In an example, the terminals 140, 144 are circular connectors 140 144 arranged around the cooperating surfaces 142 146 of the mouthpiece portion 102 and the main body 104; this is advantageous as the connection can be made independently of the relative angular position between the mouthpiece portion 102 and the main body 104. The circular connectors can be resiliently biased outwardly from their respective surfaces so as to form a secure connection when brought into connection with one another. In another example, the terminals 140, 144 are protrusions projected outwardly from both of the surface 142 of the mouthpiece portion 102 and the surface 146 of the main body 104. More specifically the terminals 140, 144 are resilient in the axial direction of the electronic cigarette 100. For instance, the terminals 140, 144 can be configured as pogo pins. In this way, each terminal 140, 144 applies a force to the opposite corresponding terminal and displaces it inwardly to the mouthpiece portion 102 or main body 104 respectively. The resilience of the pogo pin biases outward from the mouthpiece portion 102 or main body 104 respectively against this displacement. This results in a secure connection between the terminal(s) 140 of the mouthpiece portion 102 and the terminals 144 of the main body 104 as they are biased toward one another.

In an alternative, the temperature sensor 150 can be connected to a secondary set of control electronics that are arranged in the mouthpiece portion 102 of the electronic cigarette 100. The secondary control electronics are arranged to wirelessly communicate temperature measurement data from the temperature sensor 150 with the controller in the main body 104 by way of a wireless interface, such as a Bluetooth connection or a radio connection.

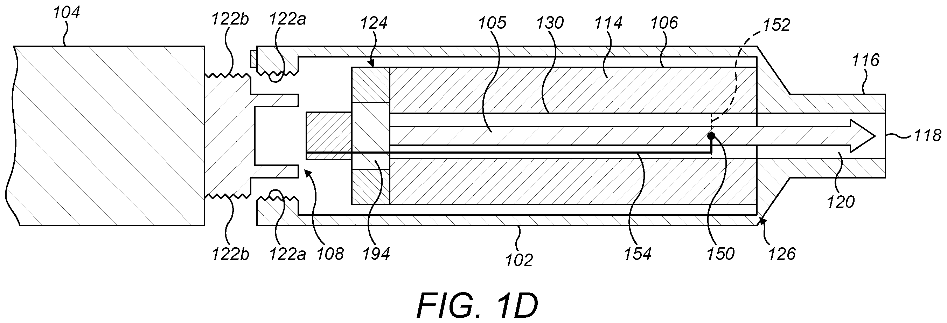

In another example, the temperature sensor 150 can be a component of the cartridge 106, arranged in the portion of the vapor flow tube 130 in the cartridge 106 by a support bracket 152. In such an example, the temperature sensor 150 can be connected to the controller by way of a wired connection from the temperature sensor 150, along the vapor flow tube 130, to the interface between the cartridge 106 and the main body 104. The electronic connection between temperature sensor 150 and the controller can then be achieved by the electrical interface between the cartridge 106 and the main body 104. This is best shown in Figure 1d. In some examples, a wired connection 154 may run along the inside of the vapor flow tube 130, as shown in Figure 1d, connecting the temperature sensor to the first end 124 of the cartridge 106 for electrical connection to the controller by the same interface as that which provides electrical connection between the main body and the atomizer 194. In other examples, the wired connection may run along the outside of the vapor flow tube 130 with the temperature sensor 150 connected to the wired connection through a sealed opening in a sidewall of the vapor flow tube 130.

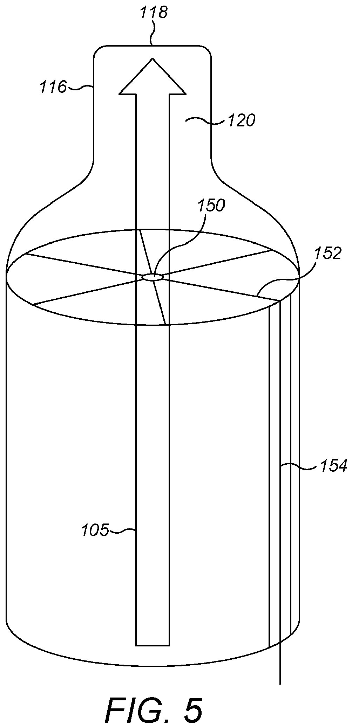

The arrangement of the temperature sensor 150 in the vapor flow path 105 is described in more detail subsequently, with reference to Figure 5.

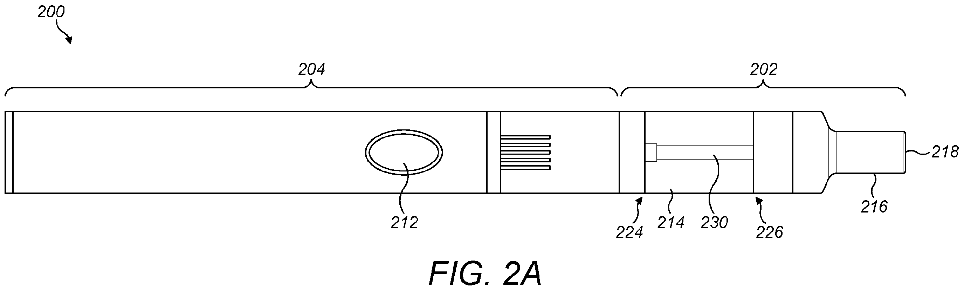

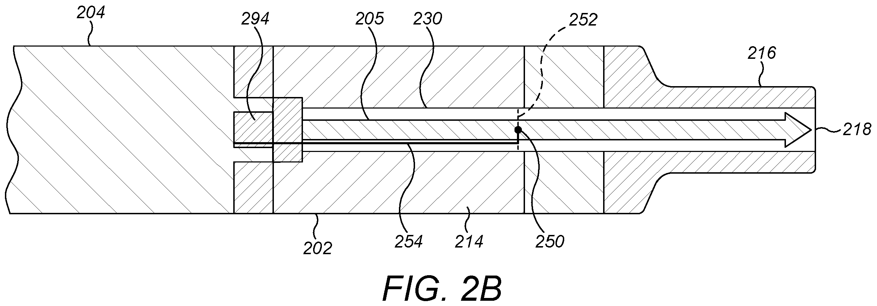

Figures 2a and 2b show another embodiment of an electronic cigarette 200. In this embodiment, the electronic cigarette 200 has a main body 204 and a mouthpiece portion 202.

In some examples, the mouthpiece portion 202 is attachable and removable from the main body 204; this can be achieved by a threaded-type connection or a bayonet-type connection, amongst others. In other examples the mouthpiece portion 202 and the main body 204 can be two portions of a single entity; that is the mouthpiece portion 202 and the main body 204 a permanently affixed to one another.

The main body 204 comprises a battery for providing power to the electronic cigarette 200, control electronics for controlling the operation of the electronic cigarette 200, and an atomizer 294 having a heater arranged to vaporize a vaporizable liquid. The main body 204 can further include a user operable button 212 for functions such as switching the electronic cigarette 200 on and off, and engaging a heater to vaporise a vaporisable liquid from a liquid store 214. The control electronics, or main control unit or controller, further comprises one or more processors and memory storing operating instructions for the electronic cigarette 200. In an example, the control electronics are a printed circuit board. The atomizer 294 includes a heater and a fluid transfer element, such as a wick or any other suitable means to transfer liquid to the heater. The fluid transfer element is arranged to wick liquid from a liquid store 214 in the mouthpiece portion 202 to the heater where it is vaporised.

The mouthpiece portion 202 comprises a mouthpiece 216 with an opening or orifice 218 upon which a consumer inhales, and a vapor flow tube 230 arranged to connect the mouthpiece opening 216 to the atomizer 294 in the main body 204. The mouthpiece portion 202 also includes a liquid store, or liquid tank, 214 arranged to contain a vaporizable liquid. In examples, the liquid tank 214 can be opened for filling and refilling by removing the mouthpiece 216 from the mouthpiece portion 202, or by removing the mouthpiece portion 202 from the main body 204. The mouthpiece 216 and liquid store 214 combined can be considered a mouthpiece portion 202 of the electronic cigarette 200.

The vapor flow tube 230 extends through the centre of the liquid tank 214, in an axial direction, and is arranged to transport vapor from the heater in the atomizer 294 to the mouthpiece. The liquid store 214 is connected to the atomizer 294 in the main body 204 at a first end 224, and the mouthpiece 216 at a second end 226, wherein the first 224 and second 226 ends of the liquid store 214 are opposite one another. That is, a vapor flow path or vapor flow channel 205 is arranged from the atomizer 294, through the vapor flow tube 230, to the mouthpiece opening 218.

The mouthpiece 216 is arranged such that when the vaporisable liquid is vaporised at the atomizer 294 it can be inhaled through the mouthpiece 216 by a consumer by way of the vapor flow tube 230.

In operation, the liquid store 214 is filled with a vaporisable liquid that is wicked by the fluid transfer element to the heater. Power is applied to the heater to heat and vaporise the liquid. A consumer inhales on the mouthpiece 216 thereby drawing the vapor along the vapor flow channel or path 205 through the vapor flow tube 230 and to the orifice 218 in the mouthpiece 216 where it is inhaled by the consumer.

In a similar manner to that described with reference to the embodiment of Figure 1, a temperature sensor 250 is arranged in the vapor flow path 205, by a support bracket 252 at a position away from the atomizer 294 and toward the mouthpiece 216. For example, the temperature sensor 250 can be positioned in the vapor flow tube 230, within the liquid store 214, closer to the mouthpiece 216 than to the atomizer 294. Figure 2b shows a cutaway diagram of the liquid store 214 with the temperature sensor 250 in the vapor flow tube 230. In other examples, the temperature sensor 250 can be positioned at the end of the vapor flow tube 230, where the vapor flow tube 230 connects to the mouthpiece 216, or in the mouthpiece 216 itself. The temperature sensor 250 is arranged to measure the temperature of a generated vapor in the vapor flow path 205 between the atomizer 294 and the orifice 218 in the mouthpiece 216.

The temperature sensor 250 is connected to the controller or control electronics. In an example, the temperature sensor 250 is connected to the controller by a wired connection 254. In examples in which the mouthpiece portion 202 and the main body 204 are permanently affixed to one another, the wired connection 254 can be a single wire extending from the sensor 250 to the controller, or a series of wires connecting the sensor 250 to the controller. In examples in which the mouthpiece portion 202 and the main body 204 are attachable and removable from one another a connectable and disconnectable connection between the sensor 250 and the controller is utilised. One or more terminals, connected to the temperature controller by a wired connection(s), are arranged on a surface of the mouthpiece portion 202 at a distal end that abuts a cooperating surface of the main body 204 at a distal end of the main body 204 when the mouthpiece portion 202 and the main body 204 are brought into connection with one another; a corresponding terminal(s), connected to the sensor 250 by a wired connection(s), is arranged on the cooperating surface of the main body 204. The terminals on the mouthpiece portion 202 and the main body 204 are arranged such that when the mouthpiece portion 202 is fully connected to the main body 204, the terminal(s) of the mouthpiece portion 202 is aligned with the corresponding terminal(s) of the main body 204. In this way, when the main body 204 and the mouthpiece portion 202 are connected to one another, the terminals are aligned forming a connection between the sensor 250 and the controller. In an example, the terminals are circular connectors arranged around the cooperating surfaces of the mouthpiece portion 202 and the main body 204; this is advantageous as the connection can be made independently of the relative angular position between the mouthpiece portion 202 and the main body 204. The circular connectors can be resiliently biased outwardly from their respective surfaces so as to form a secure connection when brought into connection with one another. In another example, the terminals are protrusions projected outwardly from both of the surface of the mouthpiece portion 202 and the surface of the main body 204. More specifically the terminals are resilient in the axial direction of the electronic cigarette 200. For instance, the terminals can be configured as pogo pins. In this way, each terminal applies a force to the opposite corresponding terminal and displaces it inwardly to the mouthpiece portion 202 or main body 204 respectively. The resilience of the pogo pin biases outward from the mouthpiece portion 202 or main body 204 respectively against this displacement. This results in a secure connection between the terminal(s) of the mouthpiece portion 202 and the terminal(s) of the main body 204 as they are biased toward one another. In some examples, the wired connection 254 may run along the inside of the vapor flow tube 230, to the terminal(s). In other examples, the wired connection 254 may run along the outside of the vapor flow tube 230 to the terminal(s) with the temperature sensor 250 connected to the wired connection through a sealed opening in a sidewall of the vapor flow tube 230.

In another example, the temperature sensor 250 is connected to a secondary set of control electronics that are arranged in the mouthpiece portion 202 of the electronic cigarette 200. The secondary control electronics are arranged to wirelessly communicate temperature measurement data from the temperature sensor 250 with the controller in the main body 204 by way of a wireless interface, such as a Bluetooth connection or a radio connection.

The arrangement of the temperature sensor 250 in the vapor flow path 205 is described in more detail subsequently, with reference to Figure 5.

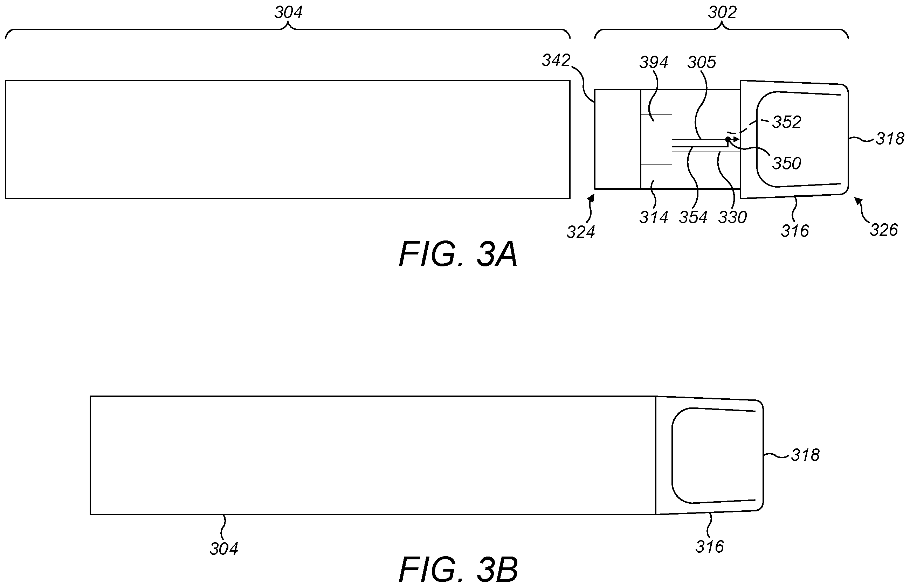

Figures 3a and 3b show another embodiment of an electronic cigarette 300 similar to that described with reference to Figures 1a to 1d.

In this embodiment, the cartridge or liquid store 314 and mouthpiece 316 form a single entity, the mouthpiece portion 302, which is connectable and disconnectable to the main body 304. That is, a liquid store 314, arranged to contain a vaporisable liquid, is part of the mouthpiece portion 302, such that the mouthpiece portion 302 including the liquid store 314 is removable from the main body 304, and interchangeable. The mouthpiece portion 302 can be thought of as a liquid store, or cartridge, 314 with a mouthpiece 316.

In a similar manner to that described with reference to Figure 1, the main body 304 comprises a battery for providing power to the electronic cigarette 300, and control electronics for controlling the operation of the electronic cigarette 300. In particular, an atomizer in the mouthpiece portion 302 is powered and controlled by the battery and control electronics in the main body 304 when the mouthpiece portion 302 is connected to the main body 304. The main body 304 can further include a user operable button for functions such as switching the electronic cigarette 300 on and off, and engaging a heater to vaporise a vaporisable liquid from the liquid store 314. The control electronics, or main control unit or controller, comprise one or more processors and memory storing operating instructions for the electronic cigarette 300. In an example, the control electronics are a printed circuit board.

The mouthpiece portion 302 comprises a mouthpiece 316 with an opening or orifice 318 at a first end portion 326, and an atomizer 394 at a second end portion 324 (the second end portion 324 being a distally opposite end to the first end portion 326). The second end 324 of the mouthpiece portion 302 further comprises an electrical contact 342 arranged to engage to main body 304 to create an electrical connection between the atomizer 394 and the battery and controller, that is a power and control electrical connection for the atomizer 394.

A liquid store 314 is arranged between the first end portion 326 and the second end portion 324 of the mouthpiece portion 302, and a vapor flow tube 330 extends from the atomizer 394 at the second end 324 of the mouthpiece portion 302, through the liquid store 314, to the mouthpiece opening 318 at the first end 326 of the mouthpiece portion 302. That is, the vapor flow tube 330 has a portion in the liquid store 314 connecting to the atomizer 394, and a portion in the mouthpiece 316 connecting to the mouthpiece opening 318.

The atomizer 394 comprises a fluid transfer element, such as a wick or any other suitable means to transfer liquid, and a heater. The fluid transfer element is arranged to wick liquid from the liquid store 314 to the heater. The heater then heats and vaporises the liquid to generate a vapor.

When the mouthpiece portion 302 and main body 304 are brought into connection with one another, the electrical contact 342 and liquid store 314 are received within the main body 304. In doing so, the electrical contact 342 of the mouthpiece portion 302 is brought into connection with a corresponding contact within the main body 304, thereby allowing for the main body 304 to power and control the atomizer 394.

In use, power is applied from the battery, by the controller, to the heater in the atomizer 394. The heater then heats liquid wicked to the heater, by the fluid transfer element, and generates a vapor. When a consumer inhales upon the opening 318 in the mouthpiece 316, the generated vapor is drawn by the mouthpiece 316 along a vapor flow path, or vapor flow channel 305; this comprises the vapor being drawn through the vapor flow tube 330, from the atomizer 394, and to the mouthpiece opening 318. The consumer can then inhale the generated vapor.

In an example, when the liquid in the liquid store 314 has run out, the mouthpiece portion 302 can be removed from main body 304 and replaced with a fresh mouthpiece portion 302. In another example, the liquid store 314 in the mouthpiece portion 302 can be refilled with fresh liquid.

A temperature sensor 350 is arranged in the vapor flow path 305 by a support bracket 352 at a position away from the atomizer 394 and toward the mouthpiece 316. The temperature sensor 350 is arranged to measure the temperature of the generated vapor and in connected to the controller.

The temperature sensor 350 is a component of the mouthpiece portion 302. The temperature sensor 350 can be arranged in the portion of the vapor flow tube 330 in the liquid store 314, or in a portion of the vapor flow tube 330 in the mouthpiece 316.

In such examples, the temperature sensor 350 can be connected to the controller in the main body 304 by way of a wired connection 354. As previously described, the mouthpiece portion 302 and the main body 304 are connectable and disconnectable from one another. As such, a connectable and disconnectable electrical connection between the temperature sensor 350 and the controller can be utilised by way of the electrical connection 342. In such an example, the temperature sensor 350 can be connected, by the wired connection 354, to an additional (or second) electrical contact at the second end portion 324 of the mouthpiece portion 302 to that which powers and controls the atomizer 394. The wired connection between the temperature sensor 350 and the controller can then be achieved by connection to a corresponding electrical contact in the main body 304 when the mouthpiece portion 302 and main body 304 are brought into connection with one another.

In the example shown in Figure 3a, the portion of the wired connection 354 in the mouthpiece portion 302 runs along the inside of the vapor flow tube 330. In other examples, the portion of the wired connection in the mouthpiece portion 302 may run along the outside of the vapor flow tube 330 with the temperature sensor 350 connected to the wired connection through a sealed opening in a sidewall of the vapor flow tube 330.

In an alternative arrangement, the temperature sensor 350 can be connected to a secondary set of control electronics that are arranged in the mouthpiece portion 302 of the electronic cigarette 300. The secondary control electronics are arranged to wirelessly communicate temperature measurement data from the temperature sensor 350 with the controller in the main body 304 by way of a wireless interface, such as a Bluetooth connection or a radio connection.

The arrangement of the temperature sensor 350 in the vapor flow path 305 is described in more detail subsequently, with reference to Figure 5.

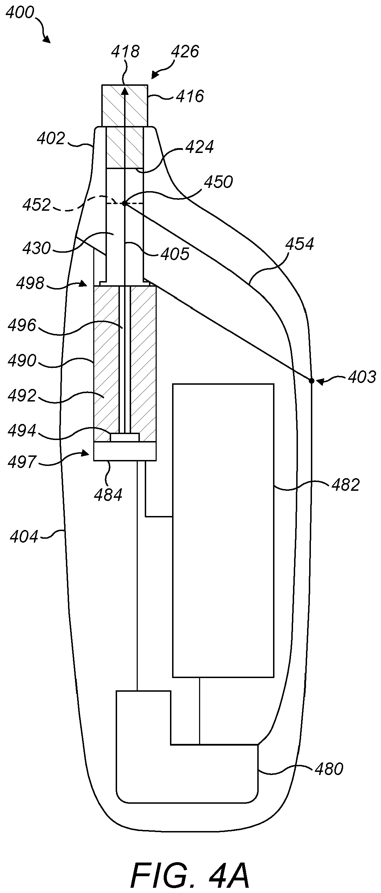

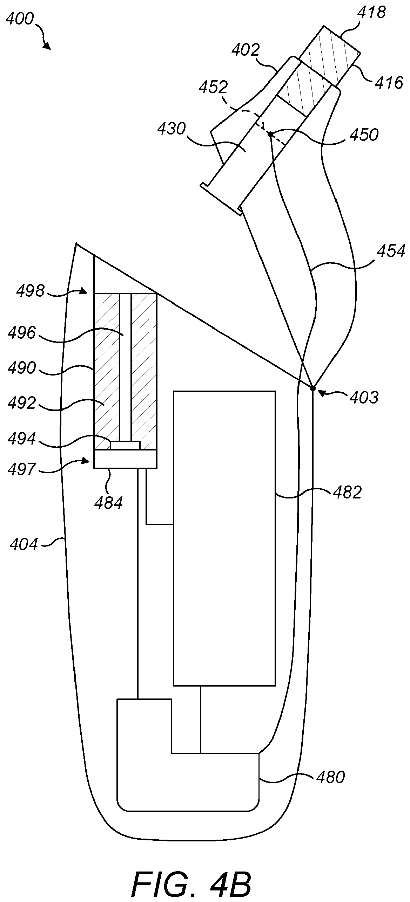

Figures 4a and 4b show another embodiment of an electronic cigarette 400. In this embodiment a mouthpiece portion 402 is connected to the main body 404 by way of a hinge 403.

In the example of Figures 4a and 4b the mouthpiece portion 402 is hinged so as to rotate in the same plane as the main body 404. In another example, the mouthpiece portion 402 can be hinged so as to rotate into a plane perpendicular to the main body 404.

The mouthpiece portion 402 comprises a mouthpiece 416 in the form a cartridge (that is a mouthpiece cartridge or first cartridge 416) containing granulates of a fibrous material, such as tobacco, or a flavoured element. The mouthpiece cartridge 416 has an opening 418 at a first end portion 426 arranged to be projected outwardly from the electronic cigarette 400, upon which the consumer can inhale. At a second, opposite, end portion 424 there is arranged an air inlet to allow the flow of vapor through the mouthpiece cartridge 416.

The mouthpiece cartridge 416 is receivable in a vapor flow tube 430 arranged in the mouthpiece portion 402 such that when a consumer draws upon the mouthpiece cartridge 416 by inhaling, vapor is drawn from the vapor flow tube, through the inlet in the mouthpiece cartridge, through the fibrous material, and to the mouthpiece opening 418 for the user to inhale.

The main body 404 comprises control electronics 480 and a battery 482, as well as a seating 484 for receiving a liquid containing cartridge (or second cartridge) 490. The main body 404 can further include a user operable button for functions such as switching the electronic cigarette 400 on and off, and engaging a heater to vaporise a vaporisable liquid from the liquid store. The control electronics 480, or main control unit or controller, comprise one or more processors and memory storing operating instructions for the electronic cigarette 400. In an example, the control electronics 480 are a printed circuit board.

The second cartridge 490 comprises a liquid store 492 arranged to contain a vaporisable liquid. The second cartridge 490 further comprises an atomizer 494; the atomizer 494 has a heater and a fluid transfer element, such as a wick or any other suitable means to transport liquid to the heater, arranged to wick liquid from the liquid store 492 to the heater. A first end 497 of the second cartridge 490, at which the atomizer 494 is positioned, is arranged to be electrically connected to the main body 404, when the second cartridge 490 is received in the seating 484, such that an electrical connection is achieved between the atomizer 494 and the control electronics 480 and battery 482 in the main body 404 through such an interface. In an alternative, the atomizer can be a component of the main body 404 engageable into the liquid store in the second cartridge.

A vapor flow tube 496 runs axially through the second cartridge 490. The vapor flow tube 496 connects the atomizer 494 at the first end 497 of the second cartridge 490, through the liquid store 492, to a second end 498 of the second cartridge (the second end 498 opposite the first end 497).

When the hinged mouthpiece portion 402 is closed and fully connected to the main body 404, as shown in Figure 4a, an end of the vapor flow tube 430 in the mouthpiece portion 402, opposite to the end in which mouthpiece cartridge 416 is received, is connected to the vapor flow tube 496 in the or second cartridge 490. That is, the vapor flow tube 496 in the second cartridge 490 aligns with the vapor flow tube 430 in the mouthpiece portion 402 when the second cartridge 490 is received in the main body 404 and the hinged mouthpiece portion 402 is closed. In this way, liquid can be wicked from the liquid store 492, by the wick, to the heater of the atomizer 494 where it is vaporised. When a consumer inhales on the mouthpiece cartridge 416, the generated vapor is drawn along a vapor flow path or channel 405 from the atomizer 494, through the vapor flow tube 496 in the second cartridge 490, through the vapor flow tube 430 in the mouthpiece portion 402, through the inlet in the mouthpiece cartridge 416, through the fibrous material in the mouthpiece cartridge 416, and to the mouthpiece opening 418 for inhalation by the consumer.

That is, vapor is generated from the second cartridge 490 and drawn through the first cartridge 416 where it interacts with the fibrous material (such as tobacco) to form a vapor flavoured by the fibrous material for inhalation by the consumer.

In other terms, liquid from the liquid store 492 in the second cartridge 490 is wicked to the heater of the atomizer 494 by the wick. The heater vaporises the liquid forming a vapor. When a consumer inhales, or draws, on the mouthpiece cartridge 416, the vapor is drawn to the mouthpiece opening 418 along the vapor flow path or channel 405 in that the vapor is drawn through the vapor flow tube 496 in the second cartridge 490, through the vapor flow tube 430 in the mouthpiece portion 402, and into the inlet of the mouthpiece cartridge 416, where it interacts with the fibrous material (such as tobacco), and to the mouthpiece opening 418 where it is inhaled by the consumer.

When the hinged mouthpiece portion 402 is open, as shown in Figure 4b, the vapor flow tube 430 is disconnected from the second cartridge 490. When in the open position, the second cartridge 490 can be removed and replaced or refilled. In some examples a spent mouthpiece cartridge 416 can be refilled with fresh fibrous material. In other examples, the mouthpiece cartridge 416 is disposable and replaceable with a new cartridge containing fresh fibrous material.

A temperature sensor 450 is arranged in the vapor flow path or channel 405. In an example, temperature sensor 450 is arranged in the mouthpiece portion 402. More specifically, the temperature sensor 450 is arranged in the vapor flow tube 430 in the mouthpiece portion 402 by a support bracket 452. That is, the temperature sensor 450 is positioned in the vapor flow tube 430 in the mouthpiece portion 402 such that the temperature sensor 450 is closer to the mouthpiece cartridge 416 than to the atomizer 494 (in the second cartridge 490) when the hinge 403 is the closed position (as in Figure 4a).

The temperature sensor 450 is positioned in the vapor flow channel 405 between the second cartridge 490 and the mouthpiece cartridge 416. As such, the vapor temperature measured by the sensor 450 corresponds to the vapor temperature before passing through the mouthpiece cartridge 416.

In the example of Figures 4a and 4b, the mouthpiece cartridge 416 is fitted and retained at a distal end portion of the vapor flow tube 430 in the mouthpiece portion 402, away from the end of the vapor flow tube 430 which connects to the second cartridge 490. The mouthpiece cartridge 416 occupies a portion of the vapor flow tube 430 in the mouthpiece portion 402. That is, a portion of the vapor flow tube 430 in the mouthpiece portion 402 below the mouthpiece cartridge 416 is not occupied by the mouthpiece cartridge 416. The temperature sensor 450 is arranged in this unoccupied portion of the vapor flow tube 430 in the mouthpiece portion 402. As a consequence, when in the closed position (as in Figure 4a), the temperature sensor 450 is positioned in the vapor flow channel 430 between the second cartridge 490 and the mouthpiece cartridge 416.

In other examples, the mouthpiece cartridge 416 may occupy the entire vapor flow tube 430 in the mouthpiece portion 402 so that when the hinged mouthpiece portion 402 is in the closed position, the mouthpiece cartridge 416 abuts the second cartridge 490, and the vapor flow tube 496 in the second cartridge 490 aligns with the inlet of the mouthpiece cartridge 416. In such an example, the temperature sensor 450 can be positioned at the end of the vapor flow tube 430 in the mouthpiece portion 402, where the vapor flow tube 430 connects to the second cartridge 490, such that the temperature sensor 450 is positioned between the second cartridge 490 and the mouthpiece cartridge 416. In such examples, the vapor flow path or channel is formed from the atomizer 494 in the second cartridge 490, through the vapor flow tube 496 in the second cartridge 490, and through the mouthpiece cartridge 416 which occupies substantially the entire vapor flow tube 430 in the mouthpiece portion 402, and to the opening 418 in the mouthpiece cartridge 416, when the consumer inhales on the mouthpiece cartridge 416.

The temperature sensor 450 is arranged to measure the temperature of a generated vapor in the vapor flow path 405, and more specifically in the vapor flow tube 430 in the mouthpiece portion 402. The temperature sensor 450 is connected to the controller 480 by a wired connection 454. The wired connection can be formed as a wire, or series of wires, routed through the hinge 403 between the mouthpiece portion 402 and the main body 404 so as to maintain a connection between the temperature sensor 450 and controller 480 when the hinge 403 is in the opened and closed positions.

The arrangement of the temperature sensor in the vapor flow path is described in more detail subsequently, with reference to Figure 5.

In the embodiments of each of Figures 1 to 4 the temperature sensor 150, 250 350, 450 can be any suitable type of temperature sensor, including but not limited to a thermocouple (such as a type K thermocouple made from alumel, nickel-chrome, or nickel aluminium) a hot wire sensor or a thermistor.

Figure 5 shows a support bracket 152 arranged to position the temperature sensor 150 in the vapor flow path or channel 105, and more specifically in the vapor flow tube 120. The diagram of Figure 5 is specific to the embodiment of Figure 1, and particularly Figure 1c, but the skilled person would readily understand that the following principles can be applied to any suitable arrangement for positioning the sensor in the vapor flow tube, such as for example in the embodiments of any one of Figures 1 to 4.

A support bracket 152, such as a mesh extending radially across the vapor flow tube 120, or any other suitable type of bracket is used to position the temperature sensor 150 in the vapor flow tube 120. The temperature sensor 150 is connected to the support bracket 152 to enable at least a portion of the sensor 150 (i.e. the measuring tip) to at least partially extend into the vapor flow channel 105. The temperature sensor 150 is preferably held in a substantially radially central position in the vapor flow tube 120 by the support bracket 152. A mesh bracket is advantageous as it allows for the temperature sensor 150 to be held in the path 105 of the vapor flow whilst not substantially restricting the vapor flow. Alternatively, a support bracket formed as a substantially square grid arranged across the vapor flow tube can also provide such advantages. In an alternative, the temperature sensor 150 can be affixed to a sidewall of the vapor flow tube 120.

In the embodiments of each of Figures 1 to 4, the atomizer can be triggered and the heater heated by the user of the device pressing a triggering button. The one or more processors detect that the triggering button has been pressed and then trigger the atomizer and heat the heater. Alternatively, a flow detector can be arranged at a suitable position in the vapor flow channel to such that the one or more processors can detect the user inhaling using flow detector; upon detecting inhalation, or airflow, the one or more processors can be configured to trigger the atomizer and heat the heater.

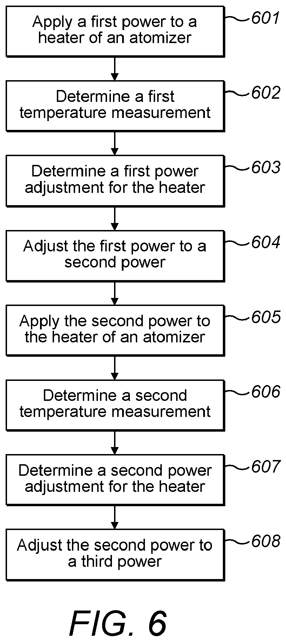

In operation, control of the temperature of the generated vapor, for the embodiments described with reference to any one of Figures 1 to 5, can be achieved using the temperature sensor. Such an approach is described with reference to Figure 6.

It should be noted that, herein, both one or more processors and/or the controller are described as performing operations. The skilled person will readily understand that the terminology is used interchangeably in that the controller comprises one or more processors that carry out the operations.

As previously described, it is desirable to control the vapor temperature to be at a satisfying temperature for the user, and preferably not exceed 60 degrees C. Most users prefer a vapor temperature that is close to the temperature of cigarette smoke (i.e. around 30 degrees C, or up to 40-50 degrees C as the length of the tobacco rod reduces). Additionally, the inventors have found that the vapor temperature also is indicative of the level of liquid around the heater. This would also enable the control electronics of the electronic cigarette to detect a "dry wick" situation and take corrective action.

Referring to figure 6, a method of controlling the vapor temperature according to the present invention is illustrated. At step 601, one or more processors at the controller of the electronic cigarette are programmed to apply a first power to the heater of the atomizer. That is, a first power level is applied to the heater, from the battery, as instructed by the controller. In an example, the first power can be pulse width modulated with a first duty cycle.

As described with reference to Figures 1 to 5, the atomizer comprises a heater and a fluid transfer element configured to transfer liquid from the liquid store to the proximity of the heater. In the illustrated embodiment, the fluid transfer element may be a wick, which enables liquid to be wicked from the liquid store to the heater. The liquid is then heated and vaporised by the heater.

The generated vapor travels through the vapor flow path, or vapor flow channel 105, 205, 305, 405, as previously described, where it interacts with the temperature sensor 150, 250, 350, 450. At step 602, the one or more processors determine a first temperature measurement in the vapor flow channel using the sensor. That is, the first temperature measurement is measured when the electronic cigarette is inhaled upon, drawing the generated vapor through the vapor flow channel. The triggering of the first temperature measurement can be caused by the on more processors detecting a flow rate in the vapor flow tube indicative of inhalation upon the electronic cigarette, or that a vaporisation trigger button, i.e. the heater button, arranged to trigger the atomizer to vaporise a vaporisable material, has been pressed. In some examples, a timer can be used to ensure there is a suitable delay between the heater button being pressed and the first temperature measurement being triggered to allow for the vapor to be generated.

In a first example, the at least one processor is configured to retrieve a single temperature measurement from the sensor at a determined time elapsed after the activation of the heater.

In some other examples, the one or more processors determine the first temperature measurement based upon a series of discrete temperature measurements during a predetermined time period. For example, the predetermined time period is within an interval of seconds, such as 3 seconds. The temperature points recorded in this time period can be averaged to determine the first temperature measurement. The predetermined time period may also be provided with a starting time to, which is greater than 0, preferably between 1.5 to 3.5 seconds after the heater activation, and more preferably between 2 to 3 seconds after the heater activation. The end time of monitoring may be at the end of a vaping session as the user inactivates the electronic cigarette. Useful temperature information can also be identified during the early stages of the heating phase to understand the liquid level, such as 0-1 seconds after the heater activation. The heater will heat up much more rapidly and to a higher temperature during the first 0-1 seconds if it is running out of liquid supply (i.e. the saturation level of the wick is low or decreasing). Temperature measurements during this phase can be used to identify, and avoid, dry burning; dry burning can be avoided by, for example, disabling the heater if the liquid supply is running out.

At step 603, the one or more processors determine a first power adjustment for the heater based upon the first temperature measurement.

That is, if the temperature of the vapor is higher than expected, the power level applied to the heater can be decreased, and if the temperature of the vapor is lower than expected, the power level applied to the heater can be increased. If the temperature is within an expected range, the power level applied to the heater can be maintained. The power adjustment is used to adjust the first power to a second power. In an example, the second power can be pulse width modulated with a second duty cycle. A desired temperature range is preferably below an upper threshold of (for example) 60°C to meet regulatory requirements. However, in other examples, the desired temperature range can be selected by the consumer.

The first power adjustment can be determined based upon a predetermined temperature threshold; the predetermined temperature threshold can be an absolute value. Alternatively, the first power adjustment can be determined based upon a predetermined temperature range.

The predetermined temperature threshold, or the predetermined temperature range, can be preset in the electronic device, to meet regulatory requirements for example. Alternatively, the predetermined temperature threshold or range can be set by the consumer so as to provide adjustable control of the vapor temperature. Adjusting the temperature can increase or decrease the vapor output; a consumer adjustable temperature threshold or range allows the consumer to increase or decrease the temperature to meet their vapor output preferences.

When determining the first power adjustment based upon a predetermined threshold, the one or more processors at the controller are configured to compare the first temperature measurement to the predetermined threshold (i.e. a temperature point) to determine the second power.

If the first temperature measurement is above the predetermined threshold, the heater power is adjusted or decreased, using the first power adjustment, to lower the temperature of the generated vapor. In such a case, the first power adjustment is a negative adjustment. As such, when the first temperature measurement is above the predetermined threshold, the second power is a lower power than the first power. The first power of the heater can be decreased to the second power by decreasing the duty cycle of a pulse width modulated voltage or current, or by decreasing the amplitude of a constantly applied voltage or current.

If the first temperature measurement is below the predetermined threshold, the heater power is adjusted or increased, using the first power adjustment, to increase the temperature of the generated vapor. In such a case, the first power adjustment is a positive adjustment. As such, when the first temperature measurement is below the predetermined threshold, the second power is a higher power than the first power. The first power of the heater can be increased to the second power by increasing the duty cycle of a pulse width modulated voltage or current, or by increasing the amplitude of a constantly applied voltage or current.

In this way, the temperature of the vapor can be adjusted if it is above or below a desired temperature threshold. This improves the user experience.

When determining the first power adjustment based upon a predetermined temperature range, the one or more processors at the controller are configured to compare the first temperature measurement to the predetermined range to determine the second power.

If the first temperature measurement is above the predetermined temperature range, the heater power is adjusted or decreased, using the first power adjustment, to lower the temperature of the generated vapor. In such a case, the first power adjustment is a negative adjustment. As such, when the first temperature measurement is above the predetermined temperature range, the second power is a lower power than the first power. Likewise to the threshold example, the first power of the heater can be decreased to the second power by decreasing the duty cycle of a pulse width modulated voltage or current, or by decreasing the amplitude of a constantly applied voltage or current.

If the first temperature measurement is below the predetermined temperature range, the heater power is adjusted or increased, using the first power adjustment, to increase the temperature of the generated vapor. In such a case, the first power adjustment is a positive adjustment. As such, when the first temperature measurement is below the predetermined temperature range, the second power is a higher power than the first power. Likewise to the threshold example, the first power of the heater can be increased to the second power by increasing the duty cycle of a pulse width modulated voltage or current, or by increasing the amplitude of a constantly applied voltage or current.

If the first temperature measurement is within the predetermined temperature range, the heater power is not adjusted as the temperature of the generated vapor does not need to be increased or decreased. In such a case, the first power adjustment is a zero adjustment (i.e. no adjustment). In other words, no adjustment is made to the duty cycle of a pulse width modulated voltage or current, or the amplitude of a constantly applied voltage or current. As such, when the first temperature measurement is within the predetermined temperature range, the second power is equal to (or at least substantially equal to) the first power.

In this way, the temperature of the vapor can be adjusted if it is above or below a desired temperature range, or maintained if it is within the desired temperature threshold range. This improves the user experience.

The predetermined threshold, or predetermined temperature range, is stored in storage accessible by the controller of the electronic cigarette, such as a memory unit in the electronic cigarette. The heater power is adjusted by adjusting the duty cycle of the pulse width modulated power applied to the heater. That is, if the heater power is to be increased, the duty cycle is increased; if the heater power is to be decreased, the duty cycle is decreased; if the heater power is to be maintained at its present level, the duty cycle is maintained. In other examples, the heater power can be adjusted by increasing or decreasing the amplitude of a continuous voltage or current level applied to the heater.

At step 604, the one or more processors adjust the first power to the second power based upon the first power adjustment, and apply the second power to the heater.

At step 605, the operation of the electronic cigarette continues in that the one or more processors apply the second power to the heater of the atomizer.

As the operation of the electronic cigarette continues, vapor generated by the heater with the second power setting reaches the temperature sensor. At step 606, the one or more processors determine a second temperature measurement in the vapor flow channel using the sensor. That is, a second measurement of the temperature is made, after the first measurement, of vapor generated with the heater using the second power.

At step 607, the one or more processors at the controller determine a second power adjustment for the heater based upon the second temperature. If the temperature of the vapor is higher than expected, the power level applied to the heater can be decreased, and if the temperature of the vapor is lower than expected, the power level applied to the heater can be increased. If the temperature is within an expected range, the power level applied to the heater can be maintained. The power adjustment is used to adjust the second power to a third power.

As with the first power adjustment, the second power adjustment can be based upon a predetermined temperature threshold, or a predetermined temperature range.

When determining the first power adjustment based upon a predetermined temperature threshold, the one or more processors at the controller are configured to compare the second temperature measurement to the predetermined threshold to determine the third power. In an example, the predetermined threshold to which the second temperature measurement is compared is the same predetermined threshold to which the first temperature measurement is compared. In an alternative, the predetermined threshold to which the second temperature measurement is compared can be a different predetermined threshold to which the first temperature measurement is compared.

If the second temperature measurement is above the predetermined threshold, the heater power is adjusted or decreased, using the second power adjustment, to lower the temperature of the generated vapor. In such a case, the second power adjustment is a negative adjustment. As such, when the second temperature measurement is above the predetermined threshold, the third power is a lower power than the second power.

If the second temperature measurement is below the predetermined threshold, the heater power is adjusted or increased, using the second power adjustment, to increase the temperature of the generated vapor. In such a case, the second power adjustment is a positive adjustment. As such, when the second temperature measurement is below the predetermined threshold, the third power is a higher power than the second power.

In this way, the temperature of the vapor can be continuously adjusted to a desired temperature as use of the electronic cigarette continues, thereby improving the user experience.

When determining the second power adjustment based upon a predetermined temperature range, the one or more processors at the controller are configured to compare the first temperature measurement to the predetermined range to determine the second power. In an example, the predetermined temperature range to which the second temperature measurement is compared is the same predetermined temperature range to which the first temperature measurement is compared. In an alternative, the predetermined temperature range to which the second temperature measurement is compared can be a different predetermined temperature range to which the first temperature measurement is compared.

If the second temperature measurement is above the predetermined temperature range, the heater power is adjusted or decreased, using the second power adjustment, to lower the temperature of the generated vapor. In such a case, the second power adjustment is a negative adjustment. As such, when the second temperature measurement is above the predetermined temperature range, the third power is a lower power than the second power.

If the second temperature measurement is below the predetermined temperature range, the heater power is adjusted or increased, using the second power adjustment, to increase the temperature of the generated vapor. In such a case, the second power adjustment is a positive adjustment. As such, when the second temperature measurement is below the predetermined temperature range, the third power is a higher power than the second power.

If the second temperature measurement is within the predetermined temperature range, the heater power is not adjusted as the temperature of the generated vapor does not need to be increased or decreased. In such a case, the second power adjustment is a zero adjustment (i.e. no adjustment). As such, when the second temperature measurement is within the predetermined temperature range, the third power is equal to (or at least substantially equal to) the second power.

In this way, the temperature of the vapor can be continue to be adjusted, if needed, to a desired temperature as use of the electronic cigarette continues, thereby improving the user experience.

At step 608, the one or more processors adjust the second power to the third power based upon the second power adjustment, and apply the third power to the heater.

The process can then continue, with subsequent temperature measurements, and power adjustments to continually refine the temperature of the generated vapor by continually adjusting the heater power when necessary. That is, the one or more processors iteratively determine further temperature measurements in the vapour flow channel, and determine further power adjustments for the heater based upon the further temperature measurements. The one or more processors then adjust the power to be applied to heater based upon the further power adjustments, and apply the further powers to the heater. At the end of the usage session, that is when the consumer has completed their vaporisation, the power to the heater is cut.

The temperature measurements are made while the user is inhaling on the electronic cigarette (thereby triggering the heater), or when the heater is triggered by pressing the heater button. In this way, temperature measurements are only recorded when there is vapor in the vapor flow channel. This prevents the temperature of ambient air in the channel being measured and conflated with the measured vapor temperatures, thereby improving the accuracy of the measured vapor temperature and the heater control.

In an example, the first temperature measurement, using the first heater power, is determined during a first inhalation upon the electronic cigarette, and the second temperature measurement, using the second heater power, is recorded during a second inhalation upon the electronic cigarette. That is, one measured temperature is determined per inhalation, and is used to control the heater for the subsequent inhalation. In this way, the temperature of the vapor in the second inhalation has been adjusted based upon the first measurement made during the first inhalation. The second measured temperature is then used to adjust the power and therefore vapor temperature for the third inhalation.

In another example, the first temperature measurement, using the first heater power, is determined at a first time point during the first inhalation and the power can be immediately adjusted to the second power during the first inhalation based upon this first temperature measurement. A second temperature measurement can then be determined at a subsequent time point during the first inhalation, based upon the vapor generated with the second power applied to the heater during the first inhalation. The second power can then be adjusted to the third power applied to the heater, again during the first inhalation, based upon the second temperature measurement. In this way, a dynamic control of the heater power, and therefore vapor temperature, can be achieved during a single inhalation. This dynamic control ensures that each inhalation by the consumer is close to the predetermined threshold, or within the predetermined temperature range. In more detail, the measured temperature is fed back in a closed loop so that adjustments to the heater power can frequently be made (for example every 10 milliseconds). This adjustment is made to match the measured temperature to a set point temperature (for example the predetermined temperature threshold, the predetermined temperature range, a point within the predetermined temperature range, or a predetermined target temperature).

The power adjustment can be determined based upon the difference between the temperature measurement and the predetermined threshold or predetermined temperature range. That is, the power adjustment is scaled based upon how much higher or lower the measured temperature is than the predetermined threshold or predetermined temperature range. Such relationships between temperature difference and required power adjustment are stored in memory at the electronic cigarette accessible by the controller.

Alternatively, the power adjustment can be achieved by incrementally adjusting the power by a predetermined amount. That is, if the first temperature is above or below the predetermined threshold, or the predetermined temperature range, the power is reduced or increased by a fixed predetermined amount respectively; i.e. the power adjustment is a fixed reduction or increase in power. The second power then corresponds to the first power, only reduced or increased by the fixed amount. Then, when the second temperature measurement is made, it is determined whether the second temperature measurement is above or below the predetermined threshold, or the predetermined temperature range; if so the power is again reduced or increased by the fixed predetermined amount, respectively.

In the case of a predetermined threshold, the process continues in reducing or increasing the power until the temperature drops below or rises above the threshold. At this point, the power is increased or reduced, respectively, in order to maintain the vapor at a temperature close to the threshold.

In the case of a predetermined temperature range, the process continues until a subsequent temperature measurement falls within the predetermined temperature range, at which point the power level is maintained (until / unless a further temperature measurement falls outside the range, at which point the adjustment(s) continues).

Following step 602, when the first temperature measurement in the vapor flow channel has been determined using the sensor, the measured vapor temperature can be used to determine if there is a problem with the cartridge. The inhalation rate of the consumer can be determined from the flow detector, and the power applied to the heater can be determined by the controller. If the vapor temperature is high for a given inhalation rate and applied power, it may be determined by the controller that there is a problem with the cartridge. As such, the controller can cause a further action to take place, such as providing the consumer with a warning or cutting out the device (for example by cutting out the heater power).

In embodiments such as those described with reference to Figures 1, 3 and 4, the electronic cigarette can be compatible with different types of cartridge, for example containing different type / amounts of liquid or vaporisable material.

Such different types of cartridge can contain vaporisable material for which the optimal vapor temperature varies. As such, different predetermined temperature thresholds and predetermined temperature ranges can be stored in the memory of the electronic cigarette; for example, in a lookup table with the corresponding type of cartridge. When the cartridge is received in the electronic cigarette, the electronic cigarette can determine the type of cartridge and perform a lookup to determine the predetermined threshold temperature, or predetermined temperature range for the cartridge.

In an example, the electronic cigarette can determine the type of cartridge by reading a near filed communication (NFC) chip in the cartridge, or similar. In another example, the electronic cigarette can determine the type of cartridge by the user inputting the type of cartridge using an interface on the electronic cigarette. In another example, the electronic cigarette can determine the type of cartridge by the user inputting the type of cartridge using a corresponding application on an electronic device (for example a smartphone) that is in communication with the electronic cigarette by a wired or wireless connection (for example a USB or Bluetooth connection); this information is then transmitted from the electronic device to the electronic cigarette by the connection.

In embodiments such as that described with reference to Figure 2, the liquid tank can contain different types of liquid compatible with the electronic cigarette. These different liquids can have different optimal vapor temperatures. As such, the user can input the liquid type that has been added to the liquid tank, using an interface of the electronic cigarette, or the user can connect to the electronic cigarette using a corresponding application at an electronic device (such as a smartphone) using a wired or wireless connection (such as a USB or Bluetooth connection) and can input the liquid type using the application; this is then transmitted by the connection to the electronic cigarette. Different liquid types, and their corresponding optimal vapor temperatures, can be stored in memory at the electronic cigarette, for example in a lookup table. The controller at the electronic can access the lookup table and determine the optimal vapor temperature (that is, the predetermined threshold, or predetermined temperature range) associated with the liquid type.

In a similar manner to those described above, the vapor temperature can be user-customisable for any of the embodiments described with reference to Figures 1 to 4. That is, instead of or in addition to the electronic device determining the predetermined threshold or predetermined temperature range based upon the type of cartridge or liquid, the user can manually input a desired vapor temperature which is to be applied as the predetermined threshold or predetermined temperature range. This desired vapor temperature can be input using an interface of the electronic cigarette, or through an associated application on an electronic device connected to the electronic cigarette (such as a smartphone) by a wired or wireless connection (such as a USB or Bluetooth connection). This input desired vapor temperature can then be stored in the memory of the electronic cigarette as the predetermined threshold or predetermined temperature range.

In embodiments such as that described with reference to Figure 4, in which the vapor is passed through a capsule after the temperature of the vapor has been measured, a predetermined adjustment factor can be applied to the measured temperature to ensure that an adjusted measured temperature corresponds to the temperature of the vapor reaching the mouth of the consumer. For example, passing the vapor through the mouthpiece cartridge may cause the vapor to cool compared to the measured temperature. Predetermined adjustment factors can be stored in the memory of the electronic cigarette and the measured temperature can be adjusted to account for the drop in temperature when the vapor passes through the mouthpiece cartridge. A number adjustment factors corresponding to different types of mouthpiece cartridge can be stored in the memory, for example in a lookup table. The electronic cigarette can detect the type of mouthpiece cartridge inserted, for example by reading an NFC chip in the cartridge or similar, or the user can input the type of cartridge using an interface on the electronic cigarette or by using an associated application on an electronic device such as a smartphone connected by a wired or wireless connection (such as a USB or Bluetooth connection) to the electronic cigarette. The controller at the electronic cigarette can then identify the corresponding temperature adjustment to the type of cartridge using the lookup table. The temperature adjustment can then be applied to the measured temperature.

In another example, a maximum vapor temperature can be stored in memory of the electronic cigarette as the predetermined threshold or predetermined temperature range. That is, a vapor temperature (or temperature range) that the electronic cigarette should not exceed. For example, the predetermined threshold or predetermined temperature range can be set as a maximum temperature; if a vapor temperature reaching or exceeding this temperature (or temperature range) is measured, the power applied to the heater is reduced. In this way compliance with regulatory maximum vapor temperatures can be accurately achieved. This is more effective and accurate than determining and limiting the vapor temperature based upon a measured temperature of the heater as the temperature control is based on the actual temperature of the vapor rather than the heater generating the vapor.

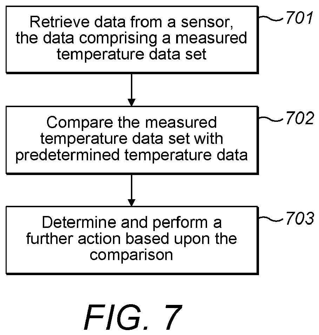

Figure 7 is a flow diagram of a method of operation of the electronic cigarette, as described with reference to any one of Figures 1 to 4, wherein the saturation level of the fluid transfer element, or at the vaporizer or atomizer, can be determined and a further action can be taken if the wick is determined to be over-saturated, under-saturated, or sufficiently saturated.

The method of determining the saturation level of the vaporizer or atomizer is advantageously applied together with the vapor temperature regulation method described with reference to Figure 6. By first determining the saturation level of the vaporizer, the risk of a false reading is reduced. This is because the measured vapor temperature is actually lower when the vaporizer is unsaturated. The method of controlling the vapor temperature as previously described would then increase the power of the heater and then increase the heating even though the vaporizer does not receive a sufficient liquid supply.

It should be noted that, herein, both one or more processors and/or the controller are described as performing operations. The skilled person will readily understand that the terminology is used interchangeably in that the controller comprises one or more processors that carry out the operations.

At step 701, the one or more processors of the electronic cigarette are configured to retrieve, from the temperature sensor, a measured temperature data set. The measured temperature data set includes one or more temperature measurements of a generated vapor as a function of time.

The temperature measurements are made while the user is inhaling on the electronic cigarette (thereby triggering the heater), or when the heater is triggered by pressing the heater button. In this way, temperature measurements are only recorded when there is vapor in the vapor flow channel. This prevents the temperature of ambient air in the channel being measured and conflated with the measured vapor temperatures. In an example, the one or more processors are configured to determine the vapor temperature for the entire period of the inhalation. In another example, the one or more processors are configured to determine the vapor temperature at a set point in time during the inhalation (that is, a set point in time after the electronic cigarette is triggered to produce a vapor), when the electronic cigarette is deemed to have reached its optimal operating temperature. That is, when the heater is at a sufficient temperature and the liquid surrounding the heater is at a specific temperature such that the electronic cigarette would be generating vapor at the expected predetermined temperature. In other words, this is the point during vapor generation at which it is expected that the temperature of the generated vapor will have reached the predetermined operating temperature. This is particularly relevant as the temperature of the generated vapor, as a function of time during the vapor generation (i.e. during the inhalation), is not necessarily constant. Preferably, the point in time is between 1.5 to 3.5 seconds, or more preferably between 2 to 3 seconds after the electronic cigarette is triggered to produce a vapor.

At step 702, the one or more processors of the electronic cigarette compare the measured temperature data set with predetermined temperature data. The predetermined temperature data is indicative of the temperature data of the vapor flow in the vapor flow channel of the electronic cigarette at different fluid transfer element, or wick, saturation levels.

In an example, when comparing the measured temperature data with the predetermined temperature data, the one or more processors of the electronic cigarette can compare the measured temperature data set with two or more predetermined temperature data sets, wherein each of the two or more predetermined temperature data sets comprise a predetermined temperature data point (that is, a predetermined temperature at a predetermined point in time).

The one or more processors then determine a predetermined temperature data set of the two or more predetermined temperature data sets that is a closest matching predetermined temperature data set to the measured temperature data set. That is, the predetermined temperature data set that has a predetermined temperature at a predetermined point in time (i.e. a predetermined temperature data point) that most closely matches the measured temperature data at the predetermined point in time (i.e. a measured temperature data point) is selected as the closest matching temperature data set.

In an example, the predetermined point in time corresponds to a time point during an inhalation, such as 3 seconds into the inhalation.

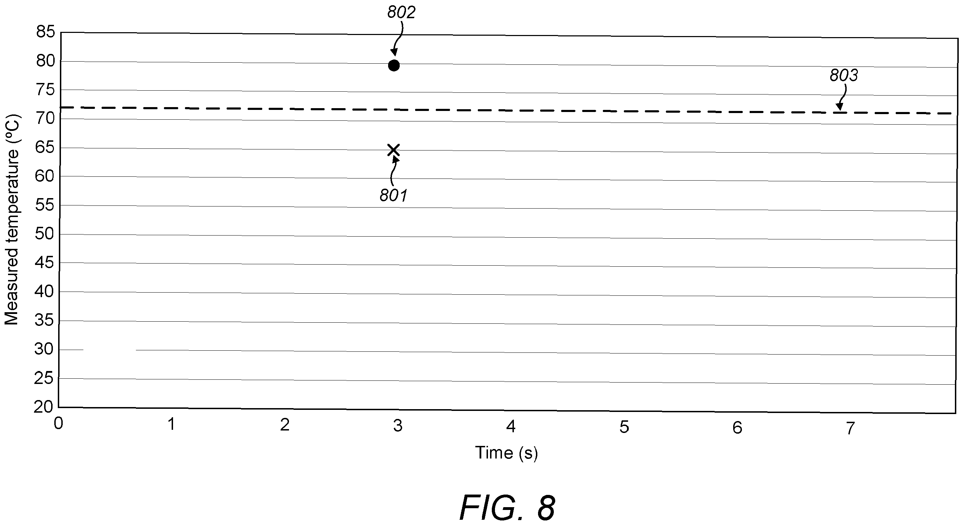

Figure 8 shows predetermined temperature data sets for two saturations levels of a wick. Each predetermined temperature data set includes one temperature data point 801, 802 corresponding to one time point (i.e. predetermined temperature data points). The first temperature data set, including data point 801 corresponds to an under-saturated or dry wick. The second temperature data set, including data point 802, corresponds to a sufficiently saturated wick. In the example of Figure 8, the time point corresponds to 3 seconds into the inhalation. If the measured temperature point at 3 seconds into the inhalation is nearer to data point 801, the first temperature data set is determined to be the closest matching temperature data set. In this case, it is determined that the wick is under-saturated. If the measured temperature data point at 3 seconds into the inhalation is nearer to data point 802, the second temperature data set is determined to be the closest matching temperature data set. In this case, it is determined that the wick is sufficiently saturated.

In an example, the closest matching predetermined data set can be determined by setting a threshold temperature 803 between the predetermined temperature data points and determining that the measured temperature data point is below or not below the threshold temperature 803. In an example, the threshold temperature 803 could be halfway between data point 801 and 802. If the measured temperature data point (for example at 3 seconds into the inhalation) is not below (or above) the threshold 803, it is determined as being nearest to predetermined data point 802; if the measured temperature data point is below (or not above) the threshold 803, it is determined as being nearest to data point 801.

Temperature measurements in the region of 2 to 3 seconds into an inhalation have been found to be particularly characteristic of the saturation level of the wick. That is, temperature data in the region of 2 to 3 seconds is noticeably different between an under-saturated wick and a sufficiently saturated wick.

At step 703, the one or more processors of the electronic cigarette determine and perform a further action based upon the comparison. If it is determined that the wick is under-saturated, and there is a risk of heating a dry wick, for example when the measured temperature data point is below the threshold temperature, the heater of the atomizer is regulated as the saturation level is determined as under-saturated. If it is determined that the wick is sufficiently saturated, for example when the measured temperature data point is not below the threshold temperature, no adjustment is made to the heater as the saturation level is determined as sufficiently saturated. In an example, the heater is regulated by disabling the heater so as to allow time for liquid to be wicked. In another example, the heater is regulated by decreasing the power output of the heater. In an example, the power output of the heater can be decreased by decreasing the duty cycle of a pulse width modulated voltage or current, or by decreasing the amplitude of a constantly applied voltage or current.

The determined amount by which the power is to be decreased can be based upon the difference between the measured temperature data point and the threshold. That is, the amount by which the power is decreased can be scaled based upon how much lower the measured temperature data point is than the threshold. Such relationships between temperature difference between the measured temperature data point and the required decrease to the power are stored in memory at the electronic cigarette accessible by the controller.

Alternatively, the power can be decreased to a suitable level by incrementally decreasing the power by a predetermined amount for each inhalation. That is, if a first measured temperature data point is below the threshold, the power is reduced by a fixed predetermined amount i.e. the power reduction is a fixed reduction in power. Then, when a second temperature data set is measured during the second inhalation, it is determined if a second measured temperature data point is below the threshold; if so the power is again reduced by the fixed predetermined amount. If the second measured temperature data point is above or at the threshold, the power level is maintained for a subsequent inhalation.

In another example, if it is determined that the wick is under-saturated, the further action can comprise implement a temporary vaping delay (for example by temporarily suspending the heater) to allow the wick to re-saturate. In another example, if it is determined that the wick is under-saturated, the further action can comprise sending a warning to the consumer to indicate that the liquid level is low.

In another example, more than two predetermined data sets can be used, with each predetermined data set indicative of temperature data of the vapor flow in the vapor flow channel of the electronic cigarette at different fluid transfer element, or wick, saturation levels. For example, when the liquid store level is beginning to run low, the flow rate to the wick could begin to decrease, resulting in a gradually drying of the wick. That is, the predetermined temperature data sets can correspond to a range of saturation levels rather than only sufficiently saturated or under-saturated. Each of the predetermined temperature data sets comprise a predetermined temperature data point, and the saturation level can be determined based upon the closest matching predetermined temperature data point to the measured temperature data point. In response to this, the heater can be regulated to adjust the temperature, thereby increasing or decreasing the vaporisation rate from the wick, to achieve a predetermined optimal wick saturation level. That is, one of the predetermined temperature data sets corresponds to a predetermined optimal saturation level, and the heater power is adjusted in subsequent inhalation until the predetermined temperature data sets corresponding to the predetermined optimal saturation level is determined to be the closest matching predetermined temperature data set.

Returning to step 702, in another example, when comparing the measured temperature data with the predetermined temperature data, the one or more processors of the electronic cigarette can compare the measured temperature data set with two or more predetermined temperature data sets, wherein each of the two or more predetermined temperature data sets comprise a plurality of predetermined temperature data points as a function of time.

In this case, the one or more processors of the electronic cigarette are configured to determine the closest matching predetermined temperature data set by identifying which of the two or more predetermined temperature data sets best fits the measured temperature data set. That is the predetermined temperature data sets are predetermined temperature profiles, or plots of vapor temperature against time. The measured temperature data is a temperature profile of the inhalation being measured, that is a plot of vapor temperature against time for the inhalation being measured.

It has been found that temperature data sets of temperature against time of the generated vapor or air in the vapor flow channel during inhalation on the electronic cigarette device have a characteristic plot shape in that the shape of the plot of temperature against time varies depending on the saturation level of the fluid transfer element. In this way, a best-fitting predetermined temperature set, corresponding to the saturation level of the fluid transfer element, can be identified for the measured temperature data set thereby providing for a determination of the saturation level of the fluid transfer element. The effect on the temperature profile for a given wick saturation level can be dependent on device characteristics (such as the heater arrangement, the heater type, the length of the air flow channel, the pressure drop within the device, the liquid store type, etc.). However, the temperature profiles of different saturation levels are consistent between devices of a same type. That is, for a given type of device, there is a clear difference between characteristic temperature profiles for a saturated and under-saturated wick. As such, saturation or under-saturation of the wick can be identified from the profile and appropriate action can be taken.

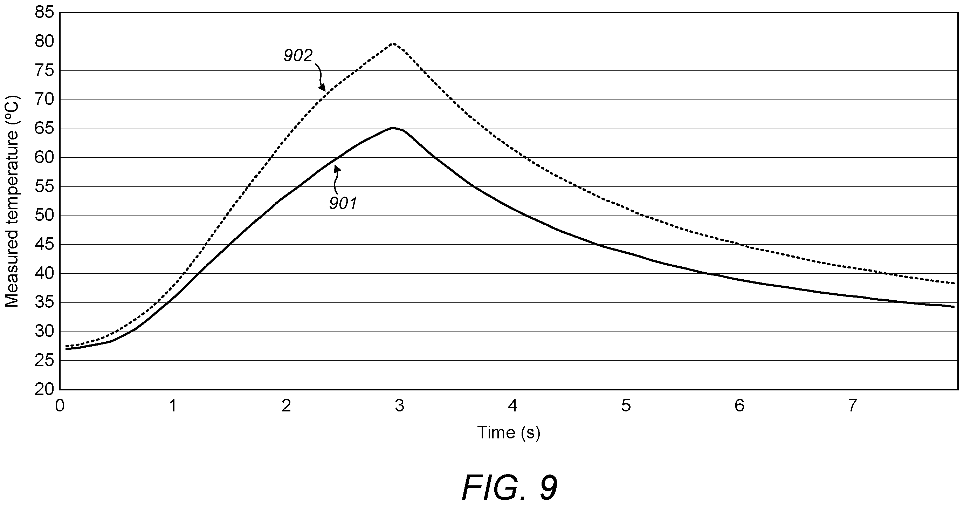

Figure 9 shows predetermined temperature data profiles 901, 902 for a 3 second inhalation at two different wick saturation levels. The first profile 901 corresponds to vapor generating from an under-saturated wick; the second profile 902 corresponds to a sufficiently saturated wick. A characteristic difference can be observed in the region between 2 to 3 seconds. That is, the profile of the under-saturated wick 901 has a flatter curve than that of the sufficiently saturated wick 902, as can be seen in Figure 9. Such a difference could be brought about by the heater heating more air rather than a vapor for an under-saturated wick.

The one or more processors execute an algorithm which maps the measured temperature data profile onto the predetermined temperature data profiles and determines which of the predetermined temperature data profiles provides a best fit. In an example, a least squares routine may be executed by the one or more processors, the least squares routine may applied between the measured temperature data set and the predetermined temperature data sets to determine which of the predetermined temperature data sets provides the best fit or closest match. In other examples, other routines suitable for determining a closest matching predetermined profile (i.e. a plot of one variable against another) to a measured data set may be implemented.

In the example of Figure 7, if it is determined that the first predetermined temperature data set 901 (i.e. the first predetermined temperature profile) is the best-fitting predetermined temperature data set to the measured temperature data set, it is determined that the wick is under-saturated. If it is determined that the second predetermined temperature data set 902 (i.e. the second predetermined temperature profile) is the best-fitting predetermined temperature data set, it is determined that the wick is sufficiently saturated.

The length of time of the inhalation can vary. However the temperature profile typically stabilises after 2-3 seconds. As such, a single temperature profile for each saturation level can be used, irrespective of the length of the inhalation time. Alternatively, predetermined temperature profiles for the saturation levels corresponding to different inhalation times can be stored in memory at the electronic cigarette. The controller then determines the length of time of the inhalation based upon the point at which the temperature reaches a peak value, the peak value corresponding to the end of the inhalation, and accesses predetermined temperature profiles that correspond to the length of time of the inhalation.

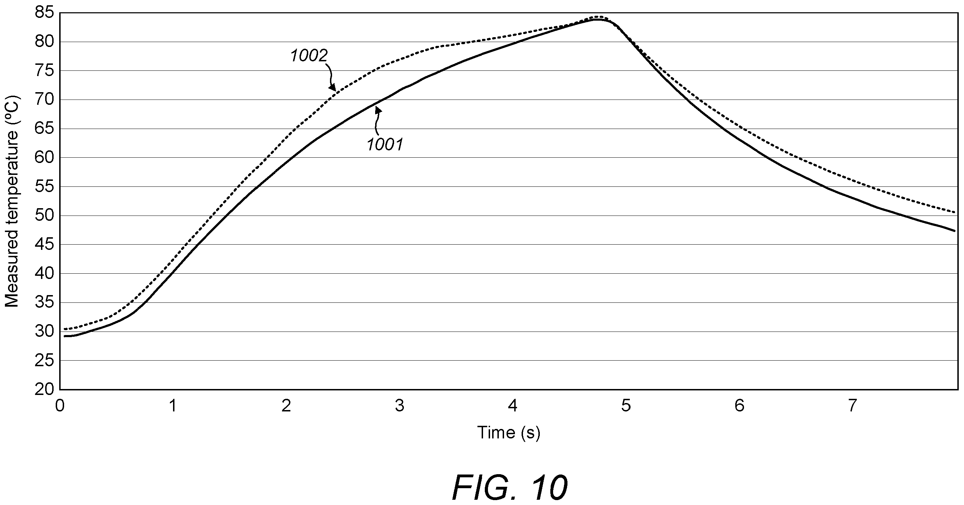

Figure 10 shows example predetermined temperature profiles, corresponding to an under-saturate wick 1001 and a sufficiently saturated wick 1002, for a 5 second inhalation. Again, a characteristic difference in the temperature profile for a vapor generated from a sufficiently saturated wick and an under-saturated wick can be observed in the region between 2 to 3 seconds.

At step 703, the one or more processors of the electronic cigarette determine and perform a further action based upon the comparison.

If it is determined that the wick is under-saturated, and there is a risk of heating a dry wick, for example the best-fitting predetermined temperature data set is the first predetermined temperature data set, the heater of the atomizer is regulated as the saturation level is determined as under-saturated. If it is determined that the wick is sufficiently saturated, for example if the best-fitting predetermined temperature data set is the second predetermined temperature data set, no adjustment is made to the heater as the saturation level is determined as sufficiently saturated. As previously described, in an example, the heater is regulated by disabling the heater so as to allow time for liquid to be wicked. In another example, the heater is regulated by decreasing the power output of the heater. In an example, the power output of the heater can be decreased by decreasing the duty cycle of a pulse width modulated voltage or current, or by decreasing the amplitude of a constantly applied voltage or current.

The determined amount by which the power is to be decreased can be based upon how closely the measured temperature data set matches each predetermined temperature data set. That is, the amount by which the power is decreased can scaled based upon how much more closely the measured temperature data set matches the first predetermined temperature data set (corresponding to an under-saturated wick) compared to the second predetermined temperature data set (corresponding to a sufficiently saturated wick). In an example, the amount by which the measured temperature data set deviates from each the predetermined temperature data sets can be calculated by a least squares fitting routine executed by the one or more processors. In other examples, other routines capable of quantifying the difference between data sets may be used. Such relationships between the fitting differences and the required decrease to the power are stored in memory at the electronic cigarette accessible by the controller.

Alternatively, the power can be decreased to a suitable level by incrementally decreasing the power by a predetermined amount for each inhalation. That is, if a first measured temperature data set most closely matches the first predetermined temperature data set (corresponding to an under-saturated wick), the power is reduced by a fixed predetermined amount i.e. the power reduction is a fixed reduction in power. Then, when a second measured temperature data set is measured during the second inhalation, it is determined if the second measured temperature data set still most closely matches the first predetermined temperature data set (corresponding to an under-saturated wick); if so the power is again reduced by the fixed predetermined amount. If the second measured temperature data set mostly closely matches the second predetermined temperature data set (corresponding to a sufficiently saturated wick), the power level is maintained for a subsequent inhalation. This process can be repeated to continually refine the heater power.

In another example, if it is determined that the wick is under-saturated, the further action can comprise implement a temporary vaping delay (for example by temporarily suspending the heater) to allow the wick to re-saturate. In another example, if it is determined that the wick is under-saturated, the further action can comprise sending a warning to the consumer to indicate that the liquid level is low.

In this way, an under-saturated wick can be detected. An under-saturated wick is indicative of the liquid level in the cartridge or liquid tank being low or empty, such that the wick dries out. An under-saturated wick is also indicative that the heater is vaporising the liquid in the wick too quickly and the wick is unable to wick further liquid from the liquid store before drying out (for example if the consumer is taking long inhalations, repeatedly, in quick succession). Another cause of under-saturation of the wick can be that the device has been stored or used in an orientation that does not allow for liquid to flow easily to the wick. A problem with the cartridge can also cause under-saturation, for example if liquid is blocked from travelling from the liquid store to the wick, thereby inhibiting the wick from becoming saturated with liquid. Heating a dry wick can result in an unpleasant user experience. Using the described method a dry wick (or an under-saturated wick) can be determined and a corrective action can be taken, such as decreasing the heater power for a subsequent inhalation, thereby slowing the vaporisation rate to stop the wick drying, or disabling the heater to allow more time for liquid to be wicked to the heater or to prevent a dry wick from being heated. The disabled heater can prompt the consumer to change the cartridge or refill the liquid store. In some examples, an indicator, such as an LED or a speaker arranged to output an audible indication, can be incorporated in the electronic cigarette to indicate to the user that the cartridge needs to be replaced or the liquid stored refilled when it is determined that the wick is dry.

In another example, more than two predetermined data sets can be used, with each predetermined data set indicative of temperature data of the vapor flow in the vapor flow channel of the electronic cigarette at different fluid transfer element, or wick, saturation levels. That is, the predetermined temperature data sets can correspond to a range of saturation levels rather than only sufficiently saturated or under-saturated. Each of the predetermined temperature data sets comprise a predetermined temperature profile, and the saturation level can be determined based upon the closest matching, or closest fitting, predetermined temperature profile to the measured temperature profile. In response to this, the heater can be regulated to adjust the temperature, thereby increasing or decreasing the vaporisation rate from the wick, to achieve a predetermined optimal wick saturation level. That is, one of the predetermined temperature data sets corresponds to a predetermined optimal saturation level, and the heater power is adjusted in subsequent inhalation until the predetermined temperature data sets corresponding to the predetermined optimal saturation level is determined to be the closest matching predetermined temperature data set.

In addition to addressing the aforementioned under-saturated wick issue, the method further provides for addressing issues relating to an over-saturated wick. An over-saturated wick can lead to projections of liquid spitting from the heater. These liquid projections can be unpleasant when the consumer inhales the vapor.

The liquid projections interact with and are detectable by the temperature sensor in the vapor flow channel.

A hot liquid projection reaching the sensor can be identified as an increasing, or positive, temperature spike in the measured temperature data set. A cold liquid projection reaching the sensor can be identified as a decreasing, or negative, temperature spike, or drop, in the measured temperature data set.

The one or more processors execute an algorithm which determines the number of temperature spikes in the measured temperature data set. In an example, a temperature spike can be identified as a sharp increase or decrease in the gradient of the plot of time against temperature.

In another example, an over-saturated wick can lead to one or more large droplets of liquid interacting with the sensor. This would affect the sensor reading, causing unusual readings for one or more inhalations, until the droplet is dislodged from the sensor. For example, the droplet mat inhibit the sensor from taking readings, and the recorded temperature profile would appear be relatively constant during inhalations until the droplet is dislodged.

In a further example, an over-saturated wick can lead to the heater being unable to reach a required vaporisation temperature. The controller can determine an inhalation rate of the consumer using the flow detector and the power applied to the heater. If the vapor temperature is lower than expected for a given inhalation rate and applied power, the controller can determine that the wick is over-saturated.

At step 702, in addition to (or instead of) comparing the temperature measured temperature data to predetermined data sets in order to determine if the wick is under-saturated, the one or more processors can be configured to compare the determined number of temperature spikes with a threshold number of temperature spikes.

The threshold number of temperature spikes is stored in memory at the electronic cigarette. The threshold number of temperature spikes can be a threshold number for a given time period. That is, the memory can store multiple thresholds corresponding to different time periods. In an example, the time period corresponds to the time for which the heater is switched on. The one or more processors determine this time period based upon the flow detector detecting an airflow (which can trigger the heater), or for how long the heater button was depressed (triggering the heater), and access a temperature spike threshold number corresponding to the time length. In an alternative, the memory may store a single threshold number normalised to a single unit of time; the processors then normalise the number of temperature spikes in the measured temperature data set to a number of spikes in a single unit of time and compare this number to the threshold.

The threshold number of temperature spikes is a number of temperature spikes, for a given time period, above which the wick is deemed to be over-saturated. As such, at step 703, in addition to (or instead of) determining that if the wick is under-saturated or sufficiently saturated, the one or more processors can also determine if the wick is over-saturated by determining if the number of temperature spikes is above the threshold number of temperature spikes.

If the number of temperature spikes is above the threshold, indicative of the wick being determined as over-saturated, the one or more processors execute a correction program.

Additionally or alternatively, the one or more processors can also execute a correction program if over-saturation is determined due to a large droplet of liquid on the sensor, or the heater being unable to reach the required vaporisation temperature.

In an example, when executing the correction program, the one or more processors increase the power applied to the heater. This raises the heater temperature, thereby increasing the amount of vapor generated, and consequently decreasing the saturation level of the wick. The heater temperature is raised by increasing the power output of the heater. In an example, the power output of the heater can be increased by increasing the duty cycle of a pulse width modulated voltage or current, or by increasing the amplitude of a constantly applied voltage or current.

In the temperature spike example, the determined amount by which the power is to be increased can be based upon the difference between the determined number of temperature spikes and the threshold number of temperature spikes. That is, the amount by which the power is increased can be scaled based upon how many more temperature spikes are determined than the threshold number. Such relationships between the determined number of temperature spikes and the required increase to the power are stored in memory at the electronic cigarette accessible by the controller.

Alternatively, the power can be increased to a suitable level by incrementally increasing the power by a predetermined amount for each inhalation. That is, if a first measured data set has a number of temperature spikes determined as above the threshold number, the power is increased by a fixed predetermined amount i.e. the power increase is a fixed increase in power. Then, when a second temperature data set is measured during the second inhalation, it is determined if the number of temperature spikes is still above the threshold; if so the power is again increased by the fixed predetermined amount. If the second measured temperature data set has a number of temperature spikes at or below the threshold, the power level is maintained for a subsequent inhalation.

In the preceding examples, the temperature measurements of the measured temperature data set can be recorded at discrete intervals. This minimises a processing burden on the one or more processor of the electronic cigarette. Alternatively, the temperature measurements of the measured temperature data set can be recorded continuously. This provides a more accurate temperature data set.

It will be readily understood to the skilled person that the preceding embodiments are not limiting; features of each embodiment may be incorporated into the other embodiments as appropriate.

The processing steps described herein carried out by the electronic cigarette may be stored in a non-transitory computer-readable medium, or storage, associated with the electronic cigarette. A computer-readable medium can include non-volatile media and volatile media. Volatile media can include semiconductor memories and dynamic memories, amongst others. Non-volatile media can include optical disks and magnetic disks, amongst others.

## Claims

1. An electronic cigarette device comprising
a mouthpiece (116; 216; 316; 416) provided with a mouthpiece opening (118; 218; 318; 418);
a vapor flow channel (105; 205; 305; 405) arranged to guide a generated vapor to the mouthpiece opening; and
a sensor (150; 250; 350; 450) arranged in the vapor flow channel at a position physically displaced from an atomizer (194; 294; 394; 494), the electronic cigarette device further comprising one or more processors;
**characterised in that** the one or more processors are configured to:
apply (601) a first power to a heater of an atomizer;
determine (602) a first temperature measurement in the vapor flow channel using the sensor;
determine (603) a first power adjustment for the heater based upon the first temperature measurement; and
adjust (604) the first power to a second power based upon the first power adjustment and apply (605) the second power to the heater.

2. The electronic cigarette device of claim 1, wherein the one or more processors are configured to determine the first temperature measurement at a point in time after the electronic cigarette device is triggered to produce a vapor, when the electronic cigarette device is deemed to have reached its optimal operating temperature.

3. The electronic cigarette device of claim 1 or claim 2, wherein the one or more processors are further configured to compare the first temperature measurement to a predetermined data set to determine if a liquid store used with the electronic cigarette device contains sufficient liquid.

4. The electronic cigarette device of any preceding claim, wherein when determining the first temperature measurement, the one or more processors are configured to determine a series of temperature measurements for a predetermined time period.

5. The electronic cigarette device of any preceding claim, wherein when determining the first power adjustment, the one or more processors are configured to:
compare the first temperature measurement to a predetermined threshold to determine the second power;
wherein the second power is a lower power than the first power when the first temperature measurement is above the predetermined threshold; and
wherein the second power is a higher power than the first power when the first temperature measurement is below the predetermined threshold.

6. The electronic cigarette device of claim 5, wherein the predetermined threshold is a predetermined temperature range, and when determining the first power adjustment the one or more processors are configured to:
compare the first temperature measurement to the predetermined temperature range to determine the second power;
wherein the second power is a lower power than the first power when the first temperature measurement is above the predetermined temperature range;
wherein the second power is a higher power than the first power when the first temperature measurement is below the predetermined temperature range; and
wherein the second power is equal to the first power when the first temperature measurement is within the predetermined temperature range.

7. The electronic cigarette device of any one of claim 5 or claim 6, wherein the predetermined threshold is determined based on a type of consumable used with the electronic cigarette device.

8. The electronic cigarette device of any one of claims 5 to 7, wherein the predetermined threshold is input by a user of the electronic cigarette device.

9. The electronic cigarette device of any preceding claim, wherein the first temperature is measured when the electronic cigarette device is inhaled upon.

10. The electronic cigarette device of any preceding claim, wherein the one or more processors determining the first temperature measurement is triggered by the one or more processors detecting at least one of:
a flow rate in the vapor flow tube indicative of inhalation upon the electronic cigarette device; or
a vaporisation trigger button, arranged to trigger an atomizer to vaporise a vaporisable material, has been pressed.

11. The electronic cigarette device of any preceding claim, wherein the first power is a pulse width modulated power output with a first duty cycle and wherein when adjusting the first power to the second power the one or more processors are configured to adjust the first duty cycle to a second duty cycle.

12. The electronic cigarette device of any preceding claim, wherein the one or more processors are further configured to:
apply the second power to a heater of an atomizer;
determine a second temperature measurement in the vapor flow channel using the sensor;
determine a second power adjustment for the heater based upon the second temperature measurement; and
adjust the second power to a third power based upon the second power adjustment and apply the third power to the heater.

13. The electronic cigarette device of claim 12, wherein when determining the second power adjustment the one or more processors are configured to:
compare the second temperature measurement to the predetermined threshold to determine the third power;
wherein the third power is a lower power than the second power when the second temperature measurement is above the predetermined threshold; and
wherein the third power is a higher power than the second power when the second temperature measurement is below the predetermined threshold.

14. The electronic cigarette device of claim 13, wherein the predetermined threshold is a predetermined temperature range, and when determining the second power adjustment the one or more processors are configured to:
compare the second temperature measurement to the predetermined temperature range to determine the third power;
wherein the third power is a lower power than the second power when the second temperature measurement is above the predetermined temperature range;
wherein the third power is a higher power than the second power when the second temperature measurement is below the predetermined temperature range; and
wherein the third power is equal to the second power when the second temperature measurement is within the predetermined temperature range.

15. The electronic cigarette device of any preceding claim, wherein the one or more processors are further configured to iteratively determine further temperature measurements in the vapor flow channel, determine further power adjustments for a heater based upon the further temperature measurements, and adjust a power to be applied to the heater to further powers based upon the further power adjustments and apply the further powers to the heater.

16. A method of operating an electronic cigarette, the electronic cigarette comprising a vapor flow channel arranged (105; 205; 305; 405) to guide a generated vapor to a mouthpiece opening (118; 218; 318; 418), and a sensor (150; 250; 350; 450) arranged in the vapor flow channel to determine a temperature in the vapor flow channel at a position physically displaced from an atomizer (194; 294; 394; 494);
**characterised by** the method comprising:
applying (601) a first power to a heater of an atomizer;
determining (602) a first temperature measurement in the vapor flow channel using the sensor;
determining (603) a first power adjustment for the heater based upon the first temperature measurement; and
adjusting (604) the first power to a second power based upon the first power adjustment and applying (605) the second power to the heater.

17. A non-transitory computer-readable medium with instructions stored thereon that when executed by one or more processors in the electronic cigarette according to claim 1 cause the one or more processors to:
apply (601) a first power to a heater of an atomizer (194; 294; 394; 494);
determine (602) a first temperature measurement in a vapor flow channel (105; 205; 305; 405) using a sensor (150; 250; 350; 450), the sensor arranged in the vapor flow channel of an electronic cigarette device;
determine (603) a first power adjustment for the heater based upon the first temperature measurement; and
adjust (604) the first power to a second power based upon the first power adjustment and apply (605) the second power to the heater.

## Patentansprüche

1. Elektronische Zigarettenvorrichtung, umfassend
ein Mundstück (116; 216; 316; 416), das mit einer Mundstücköffnung (118; 218; 318; 418) versehen ist;
einen Dampfströmungskanal (105; 205; 305; 405), der angeordnet ist, um einen erzeugten Dampf zu der Mundstücköffnung zu leiten; und
einen Sensor (150; 250; 350; 450), der in dem Dampfströmungskanal an einer Position angeordnet ist, die physisch von einem Zerstäuber (194; 294; 394; 494) verschoben ist, wobei die elektronische Zigarettenvorrichtung weiter einen oder mehrere Prozessoren umfasst;
**dadurch gekennzeichnet, dass** der eine oder die mehreren Prozessoren weiter konfiguriert sind zum:
Anlegen (601) einer ersten Leistung an einen Erhitzer eines Zerstäubers;
Bestimmen (602) einer ersten Temperaturmessung im Dampfströmungskanal unter Verwendung des Sensors;
Bestimmen (603) einer ersten Leistungsanpassung für den Erhitzer basierend auf der ersten Temperaturmessung; und
Anpassen (604) der ersten Leistung an eine zweite Leistung basierend auf der ersten Leistungsanpassung und Anlegen (605) der zweiten Leistung an den Erhitzer.

2. Elektronische Zigarettenvorrichtung nach Anspruch 1, wobei der eine oder die mehreren Prozessoren konfiguriert sind, um die erste Temperaturmessung zu einem Zeitpunkt zu bestimmen, nachdem die elektronische Zigarettenvorrichtung zur Erzeugung eines Dampfes ausgelöst wurde, wenn erachtet wird, dass die elektronische Zigarettenvorrichtung ihre optimale Betriebstemperatur erreicht hat.

3. Elektronische Zigarettenvorrichtung nach Anspruch 1 oder Anspruch 2, wobei der eine oder die mehreren Prozessoren weiter konfiguriert sind, um die erste Temperaturmessung mit einem vorbestimmten Datensatz zu vergleichen, um zu bestimmen, ob ein mit der elektronischen Zigarettenvorrichtung verwendeter Flüssigkeitsspeicher ausreichend Flüssigkeit enthält.

4. Elektronische Zigarettenvorrichtung nach einem vorstehenden Anspruch, wobei bei der Bestimmung der ersten Temperaturmessung der eine oder die mehreren Prozessoren konfiguriert sind, um eine Reihe von Temperaturmessungen für eine vorbestimmte Zeitperiode zu bestimmen.

5. Elektronische Zigarettenvorrichtung nach einem vorstehenden Anspruch, wobei bei der Bestimmung der ersten Leistungsanpassung der eine oder die mehreren Prozessoren konfiguriert sind zum:
Vergleichen der ersten Temperaturmessung mit einer vorbestimmten Schwelle, um die zweite Leistung zu bestimmen;
wobei die zweite Leistung eine geringere Leistung als die erste Leistung ist, wenn die erste Temperaturmessung über der vorbestimmten Schwelle liegt; und
wobei die zweite Leistung eine höhere Leistung als die erste Leistung ist, wenn die erste Temperaturmessung unter der vorbestimmten Schwelle liegt.

6. Elektronische Zigarettenvorrichtung nach Anspruch 5, wobei die vorbestimmte Schwelle ein vorbestimmter Temperaturbereich ist und bei der Bestimmung der ersten Leistungsanpassung der eine oder die mehreren Prozessoren konfiguriert sind zum:
Vergleichen der ersten Temperaturmessung mit dem vorbestimmten Temperaturbereich, um die zweite Leistung zu bestimmen;
wobei die zweite Leistung eine geringere Leistung als die erste Leistung ist, wenn die erste Temperaturmessung über dem vorbestimmten Temperaturbereich liegt;
wobei die zweite Leistung eine höhere Leistung als die erste Leistung ist, wenn die erste Temperaturmessung unter dem vorbestimmten Temperaturbereich liegt; und
wobei die zweite Leistung gleich der ersten Leistung ist, wenn die erste Temperaturmessung innerhalb des vorbestimmten Temperaturbereichs liegt.

7. Elektronische Zigarettenvorrichtung nach einem der Ansprüche 5 oder 6, wobei die vorbestimmte Schwelle basierend auf einer Art von Verbrauchsstoff bestimmt wird, der mit der elektronischen Zigarettenvorrichtung verwendet wird.

8. Elektronische Zigarettenvorrichtung nach einem der Ansprüche 5 bis 7, wobei die vorbestimmte Schwelle von einem Benutzer der elektronischen Zigarettenvorrichtung eingegeben wird.

9. Elektronische Zigarettenvorrichtung nach einem vorstehenden Anspruch, wobei die erste Temperatur gemessen wird, wenn an der elektronischen Zigarettenvorrichtung inhaliert wird.

10. Elektronische Zigarettenvorrichtung nach einem vorstehenden Anspruch, wobei der eine oder die mehreren Prozessoren, die die erste Temperaturmessung bestimmen, dadurch ausgelöst werden, dass der eine oder die mehreren Prozessoren mindestens eines der Folgenden erkennen:
eine Strömungsrate in dem Dampfströmungsrohr, die auf eine Inhalation an der elektronischen Zigarettenvorrichtung hinweist; oder
ein Verdampfungsauslöseknopf, der angeordnet ist, um einen Zerstäuber zum Verdampfen eines verdampfbaren Stoffs auszulösen, wurde gedrückt.

11. Elektronische Zigarettenvorrichtung nach einem vorstehenden Anspruch, wobei die erste Leistung eine impulsbreitenmodulierte Leistungsausgabe mit einem ersten Arbeitszyklus ist und wobei beim Anpassen der ersten Leistung an die zweite Leistung der eine oder die mehreren Prozessoren konfiguriert sind, um den ersten Arbeitszyklus an einen zweiten Arbeitszyklus anzupassen.

12. Elektronische Zigarettenvorrichtung nach einem vorstehenden Anspruch, wobei der eine oder die mehreren Prozessoren weiter konfiguriert sind zum:
Anlegen der zweiten Leistung an einen Erhitzer eines Zerstäubers;
Bestimmen einer zweiten Temperaturmessung im Dampfströmungskanal unter Verwendung des Sensors;
Bestimmen einer zweiten Leistungsanpassung für den Erhitzer basierend auf der zweiten Temperaturmessung; und
Anpassen der zweiten Leistung an eine dritte Leistung basierend auf der zweiten Leistungsanpassung und Anlegen der dritten Leistung an den Erhitzer.

13. Elektronische Zigarettenvorrichtung nach Anspruch 12, wobei bei der Bestimmung der zweiten Leistungsanpassung der eine oder die mehreren Prozessoren konfiguriert sind zum:
Vergleichen der zweiten Temperaturmessung mit der vorbestimmten Schwelle, um die dritte Leistung zu bestimmen;
wobei die dritte Leistung eine geringere Leistung als die zweite Leistung ist, wenn die zweite Temperaturmessung über der vorbestimmten Schwelle liegt; und
wobei die dritte Leistung eine höhere Leistung als die zweite Leistung ist, wenn die zweite Temperaturmessung unter der vorbestimmten Schwelle liegt.

14. Elektronische Zigarettenvorrichtung nach Anspruch 13, wobei die vorbestimmte Schwelle ein vorbestimmter Temperaturbereich ist und bei der Bestimmung der zweiten Leistungsanpassung der eine oder die mehreren Prozessoren konfiguriert sind zum:
Vergleichen der zweiten Temperaturmessung mit dem vorbestimmten Temperaturbereich, um die dritte Leistung zu bestimmen;
wobei die dritte Leistung eine geringere Leistung als die zweite Leistung ist, wenn die zweite Temperaturmessung über dem vorbestimmten Temperaturbereich liegt;
wobei die dritte Leistung eine höhere Leistung als die zweite Leistung ist, wenn die zweite Temperaturmessung unter dem vorbestimmten Temperaturbereich liegt; und
wobei die dritte Leistung gleich der zweiten Leistung ist, wenn die zweite Temperaturmessung innerhalb des vorbestimmten Temperaturbereichs liegt.

15. Elektronische Zigarettenvorrichtung nach einem vorstehenden Anspruch, wobei der eine oder die mehreren Prozessoren weiter konfiguriert sind, um iterativ weitere Temperaturmessungen im Dampfströmungskanal zu bestimmen, weitere Leistungsanpassungen für einen Erhitzer basierend auf den weiteren Temperaturmessungen zu bestimmen und eine Leistung, die an den Erhitzer angelegt werden soll, auf weitere Leistungen basierend auf den weiteren Leistungsanpassungen anzupassen und die weiteren Leistungen an den Erhitzer anzulegen.

16. Verfahren zum Betreiben einer elektronischen Zigarette, wobei die elektronische Zigarette einen Dampfströmungskanal (105; 205; 305; 405) umfasst, der angeordnet ist, um einen erzeugten Dampf zu einer Mundstücköffnung (118; 218; 318; 418) zu leiten, und einen Sensor (150; 250; 350; 450), der in dem Dampfströmungskanal angeordnet ist, um eine Temperatur in dem Dampfströmungskanal an einer Position zu bestimmen, die physisch von einem Zerstäuber (194; 294; 394; 494) verschoben ist;
**dadurch gekennzeichnet, dass** das Verfahren umfasst:
Anlegen (601) einer ersten Leistung an einen Erhitzer eines Zerstäubers;
Bestimmen (602) einer ersten Temperaturmessung im Dampfströmungskanal unter Verwendung des Sensors;
Bestimmen (603) einer ersten Leistungsanpassung für den Erhitzer basierend auf der ersten Temperaturmessung; und
Anpassen (604) der ersten Leistung an eine zweite Leistung basierend auf der ersten Leistungsanpassung und Anlegen (605) der zweiten Leistung an den Erhitzer.

17. Nicht-transitorisches computerlesbares Medium mit darauf gespeicherten Anweisungen, die, wenn sie von einem oder mehreren Prozessoren in der elektronischen Zigarette nach Anspruch 1 ausgeführt werden, den einen oder die mehreren Prozessoren veranlassen zum:
Anlegen (601) einer ersten Leistung an einen Erhitzer eines Zerstäubers (194; 294; 394; 494);
Bestimmen (602) einer ersten Temperaturmessung in einem Dampfströmungskanal (105; 205; 305; 405) unter Verwendung eines Sensors (150; 250; 350; 450), wobei der Sensor im Dampfströmungskanal einer elektronischen Zigarettenvorrichtung angeordnet ist;
Bestimmen (603) einer ersten Leistungsanpassung für den Erhitzer basierend auf der ersten Temperaturmessung; und
Anpassen (604) der ersten Leistung an eine zweite Leistung basierend auf der ersten Leistungsanpassung und Anlegen (605) der zweiten Leistung an den Erhitzer.

## Revendications

1. Dispositif de cigarette électronique comprenant
un embout buccal (116 ; 216 ; 316 ; 416) doté d'une ouverture d'embout buccal (118; 218 ; 318 ; 418) ;
un canal d'écoulement de vapeur (105 ; 205 ; 305 ; 405) agencé pour guider une vapeur générée vers l'ouverture d'embout buccal ; et
un capteur (150 ; 250 ; 350 ; 450) agencé dans le canal d'écoulement de vapeur en une position physiquement éloignée d'un atomiseur (194 ; 294 ; 394 ; 494), le dispositif de cigarette électronique comprenant en outre un ou plusieurs processeurs ;
**caractérisé en ce que** les un ou plusieurs processeurs sont configurés pour :
appliquer (601) une première puissance à un élément chauffant d'un atomiseur ;
déterminer (602) une première mesure de température dans le canal d'écoulement de vapeur en utilisant le capteur ;
déterminer (603) un premier réglage de puissance pour l'élément chauffant sur la base de la première mesure de température ; et
régler (604) la première puissance sur une deuxième puissance sur la base du premier réglage de puissance et appliquer (605) la deuxième puissance à l'élément chauffant.

2. Dispositif de cigarette électronique selon la revendication 1, dans lequel les un ou plusieurs processeurs sont configurés pour déterminer la première mesure de température à un instant après que le dispositif de cigarette électronique a été déclenché pour produire une vapeur, lorsque le dispositif de cigarette électronique est considéré comme ayant atteint sa température de fonctionnement optimale.

3. Dispositif de cigarette électronique selon la revendication 1 ou la revendication 2, dans lequel les un ou plusieurs processeurs sont en outre configurés pour comparer la première mesure de température avec un ensemble de données prédéterminé pour déterminer si un réservoir de liquide utilisé avec le dispositif de cigarette électronique contient suffisamment de liquide.

4. Dispositif de cigarette électronique selon une quelconque revendication précédente, dans lequel, lors de la détermination de la première mesure de température, les un ou plusieurs processeurs sont configurés pour déterminer une série de mesures de température pendant une période de temps prédéterminée.

5. Dispositif de cigarette électronique selon une quelconque revendication précédente, dans lequel, lors de la détermination du premier réglage de puissance, les un ou plusieurs processeurs sont configurés pour :
comparer la première mesure de température avec un seuil prédéterminé pour déterminer la deuxième puissance ;
dans lequel la deuxième puissance est une puissance inférieure à la première puissance lorsque la première mesure de température est supérieure au seuil prédéterminé ; et
dans lequel la deuxième puissance est une puissance supérieure à la première puissance lorsque la première mesure de température est inférieure au seuil prédéterminé.

6. Dispositif de cigarette électronique selon la revendication 5, dans lequel le seuil prédéterminé est une plage de températures prédéterminée, et lors de la détermination du premier réglage de puissance, les un ou plusieurs processeurs sont configurés pour :
comparer la première mesure de température avec la plage de températures prédéterminée pour déterminer la deuxième puissance ;
dans lequel la deuxième puissance est une puissance inférieure à la première puissance lorsque la première mesure de température est supérieure à la plage de températures prédéterminée ;
dans lequel la deuxième puissance est une puissance supérieure à la première puissance lorsque la première mesure de température est inférieure à la plage de températures prédéterminée ; et
dans lequel la deuxième puissance est égale à la première puissance lorsque la première mesure de température se situe dans la plage de températures prédéterminée.

7. Dispositif de cigarette électronique selon l'une quelconque de la revendication 5 ou de la revendication 6, dans lequel le seuil prédéterminé est déterminé sur la base d'un type de consommable utilisé avec le dispositif de cigarette électronique.

8. Dispositif de cigarette électronique selon l'une quelconque des revendications 5 à 7, dans lequel le seuil prédéterminé est entré par un utilisateur du dispositif de cigarette électronique.

9. Dispositif de cigarette électronique selon une quelconque revendication précédente, dans lequel la première température est mesurée lorsque l'on exerce une aspiration sur le dispositif de cigarette électronique.

10. Dispositif de cigarette électronique selon une quelconque revendication précédente, dans lequel les un ou plusieurs processeurs déterminant la première mesure de température sont déclenchés par les un ou plusieurs processeurs détectant au moins l'un parmi :
un débit dans le tube d'écoulement de vapeur indiquant une aspiration exercée sur le dispositif de cigarette électronique ; ou
un bouton de déclenchement de vaporisation, agencé pour déclencher un atomiseur pour vaporiser un matériau vaporisable, qui a été enfoncé.

11. Dispositif de cigarette électronique selon une quelconque revendication précédente, dans lequel la première puissance est une puissance de sortie modulée en largeur d'impulsion avec un premier rapport cyclique et dans lequel, lors du réglage de la première puissance sur la deuxième puissance, les un ou plusieurs processeurs sont configurés pour régler le premier rapport cyclique sur un second rapport cyclique.

12. Dispositif de cigarette électronique selon une quelconque revendication précédente, dans lequel les un ou plusieurs processeurs sont en outre configurés pour :
appliquer la deuxième puissance à un élément chauffant d'un atomiseur ;
déterminer une seconde mesure de température dans le canal d'écoulement de vapeur en utilisant le capteur ;
déterminer un second réglage de puissance pour l'élément chauffant sur la base de la seconde mesure de température ; et
régler la deuxième puissance sur une troisième puissance sur la base du second réglage de puissance et appliquer la troisième puissance à l'élément chauffant.

13. Dispositif de cigarette électronique selon la revendication 12, dans lequel, lors de la détermination du second réglage de puissance, les un ou plusieurs processeurs sont configurés pour :
comparer la seconde mesure de température avec le seuil prédéterminé pour déterminer la troisième puissance ;
dans lequel la troisième puissance est une puissance inférieure à la deuxième puissance lorsque la seconde mesure de température est supérieure au seuil prédéterminé ; et
dans lequel la troisième puissance est une puissance supérieure à la deuxième puissance lorsque la seconde mesure de température est inférieure au seuil prédéterminé.

14. Dispositif de cigarette électronique selon la revendication 13, dans lequel le seuil prédéterminé est une plage de températures prédéterminée, et lors de la détermination du second réglage de puissance, les un ou plusieurs processeurs sont configurés pour :
comparer la seconde mesure de température avec la plage de températures prédéterminée pour déterminer la troisième puissance ;
dans lequel la troisième puissance est une puissance inférieure à la deuxième puissance lorsque la seconde mesure de température est supérieure à la plage de températures prédéterminée ;
dans lequel la troisième puissance est une puissance supérieure à la deuxième puissance lorsque la seconde mesure de température est inférieure à la plage de températures prédéterminée ; et
dans lequel la troisième puissance est égale à la deuxième puissance lorsque la seconde mesure de température se situe dans la plage de températures prédéterminée.

15. Dispositif de cigarette électronique selon une quelconque revendication précédente, dans lequel les un ou plusieurs processeurs sont en outre configurés pour déterminer de manière itérative d'autres mesures de température dans le canal d'écoulement de vapeur, déterminer d'autres réglages de puissance pour un élément chauffant sur la base des autres mesures de température, et régler une puissance à appliquer à l'élément chauffant sur d'autres puissances sur la base des autres réglages de puissance et appliquer les autres puissances à l'élément chauffant.

16. Procédé de fonctionnement d'une cigarette électronique, la cigarette électronique comprenant un canal d'écoulement de vapeur (105 ; 205 ; 305 ; 405) agencé pour guider une vapeur générée vers une ouverture d'embout buccal (118 ; 218 ; 318 ; 418), et un capteur (150; 250; 350; 450) agencé dans le canal d'écoulement de vapeur pour déterminer une température dans le canal d'écoulement de vapeur en une position physiquement éloignée d'un atomiseur (194 ; 294 ; 394 ; 494) ;
**caractérisé par** le procédé comprenant :
l'application (601) d'une première puissance à un élément chauffant d'un atomiseur ;
la détermination (602) d'une première mesure de température dans le canal d'écoulement de vapeur en utilisant le capteur ;
la détermination (603) d'un premier réglage de puissance pour l'élément chauffant sur la base de la première mesure de température ; et
le réglage (604) de la première puissance sur une deuxième puissance sur la base du premier réglage de puissance et l'application (605) de la deuxième puissance à l'élément chauffant.

17. Support non transitoire lisible par ordinateur avec des instructions stockées sur celui-ci qui, lorsqu'elles sont exécutées par un ou plusieurs processeurs dans la cigarette électronique selon la revendication 1, amènent les un ou plusieurs processeurs à :
appliquer (601) une première puissance à un élément chauffant d'un atomiseur (194 ; 294 ; 394 ; 494) ;
déterminer (602) une première mesure de température dans un canal d'écoulement de vapeur (105 ; 205 ; 305 ; 405) en utilisant un capteur (150 ; 250 ; 350 ; 450), le capteur étant agencé dans le canal d'écoulement de vapeur d'un dispositif de cigarette électronique ;
déterminer (603) un premier réglage de puissance pour l'élément chauffant sur la base de la première mesure de température ; et
régler (604) la première puissance sur une deuxième puissance sur la base du premier réglage de puissance et appliquer (605) la deuxième puissance à l'élément chauffant.
